# EUROPEAN PATENT APPLICATION

(11) **EP 4 564 781 A1**
(43) Date of publication of application: **04.06.2025**
(21) Application number: 22952541.5
(22) Date of filing: 29.07.2022
(51) Int. Cl.: H04L 61/50

(54) **COMMUNICATION METHOD AND APPARATUS**

(71) Applicant: Huawei Technologies Co., Ltd., Shenzhen, Guangdong 518129 (CN)
(72) Inventor: WANG, Yali, Shenzhen, Guangdong 518129 (CN); ZHANG, Xudong, Shenzhen, Guangdong 518129 (CN); WANG, Jian, Shenzhen, Guangdong 518129 (CN)
(74) Representative: Gill Jennings & Every LLP
(86) International application number: PCT/CN2022/109174
(87) International publication number: WO 2024/021094

(57) **Abstract**

A communication method and apparatus may be applied to intelligent application scenarios such as an in-vehicle communication scenario, a wireless battery management system, and a smart home scenario, and may be applied to vehicle-to-everything, a spark link network, and the like. The method may include: generating address allocation capability indication information, and sending the address allocation capability indication information to a second node, where the address allocation capability indication information indicates an address allocation capability of a first node, so that the address allocation capability is notified to the second node through the address allocation capability indication information, and there is no need to search, by using a broadcast message or a multicast message, for a node having an address allocation capability. This reduces radio resource overheads. The second node learns of the address allocation capability of the first node, so that the second node determines whether to initiate an address request to the first node, to reduce unnecessary address request packets and further reduce radio resource overheads.

## Description

### TECHNICAL FIELD

This application relates to the field of wireless communication technologies, and in particular, to a communication method and apparatus.

### BACKGROUND

As wireless communication technologies continuously develop, intelligent application scenarios such as a wireless battery management system (battery management system, BMS), a sensor network, a smart home, a smart cockpit, smart driving, smart manufacturing, and smart transportation emerge. A smart home scenario is used as an example. The smart home scenario may include at least one communication domain, one communication domain includes one primary node and at least one secondary node, and any two nodes may communicate with each other based on a communication address.

In the communication domain, a node usually obtains the communication address based on a dynamic host configuration protocol (dynamic host configuration protocol, DHCP), and a large quantity of broadcast messages or multicast messages are used, resulting in an increase in radio resource overheads. Therefore, in a process in which the node obtains the communication address, how to reduce radio resource overheads is an urgent technical problem to be resolved.

### SUMMARY

This application provides a communication method and apparatus, to indicate an address allocation capability of a node. This helps reduce radio resource overheads.

According to a first aspect, this application provides a communication method. The method is applied to a first node, and may be performed by the first node, or may be performed by a module in the first node, for example, performed by a chip, a processor, or the like in the first node. The method may include: generating address allocation capability indication information, and sending the address allocation capability indication information to a second node. The address allocation capability indication information indicates an address allocation capability of the first node.

It can be learned that, the first node notifies the second node of the address allocation capability of the first node through the address allocation capability indication information, and the second node does not need to search, by using a broadcast message or a multicast message, for a node having an address allocation capability, so that radio resource overheads and time can be reduced. The second node learns of the address allocation capability of the first node, so that the second node determines whether to initiate an address request to the first node, to reduce unnecessary address request packets, and further reduce radio resource overheads.

The second node is directly connected to the first node, that is, the second node and the first node are mutually neighboring nodes. In this application, an address is a communication address. Unless otherwise specified, the address and the communication address may be replaced with each other.

Optionally, the address allocation capability indication information specifically indicates that:
if the first node has an address allocation capability, the first node may allocate a communication address for another node, for example, may allocate a communication address for the second node; and therefore, when receiving an address request packet of the another node, the first node may allocate the communication address for the another node, so that the another node can quickly obtain the allocated communication address;
or if the first node has an address allocation proxy capability, the first node can relay an address request, address allocation, and the like for another node; and therefore, the first node may request a communication address for another node from a node having an address allocation capability, to reduce radio resource overheads;
or if the first node does not have an address allocation capability, the first node cannot allocate a communication address, and cannot relay an address request, address allocation, or the like for another node; and therefore, the first node may request a communication address from a node having an address allocation capability, to reduce unnecessary address request packets.

In a possible implementation, the address allocation capability indication information is carried in a wireless adjacency protocol (wireless adjacency protocol, WAP) packet. The WAP packet is a packet transmitted in a process of establishing a neighbor relationship. In the process of establishing the neighbor relationship, the address allocation capability indication information is carried in the WAP packet. This can save signaling overheads.

In another possible implementation, the address allocation capability indication information is carried in a link-state routing protocol (wireless link state protocol, WLS) packet. When a WLS is deployed in a communication domain to which the first node and the second node belong, the address allocation capability indication information is carried in the WLS packet, so that signaling overheads can be reduced.

In still another possible implementation, the address allocation capability indication information is carried in a non-link-state routing protocol packet. When a non-link-state routing protocol is deployed in the communication domain to which the first node and the second node belong, the address allocation capability indication information is carried in the non-link-state routing protocol packet or a newly defined protocol packet, and may be advertised in a broadcast or multicast manner. Therefore, that a neighboring node learns of the address allocation capability of the first node is not limited.

Optionally, when the address allocation capability indication information indicates that the first node has the address allocation capability or the first node has the address allocation proxy capability, the method further includes: receiving a first packet from the second node, where the first packet includes a first address configuration message, and the first address configuration message is used to allocate or release a first communication address for the second node.

The first address configuration message may include first request information used to request to allocate the first communication address for the second node, that is, request to allocate a new communication address for the second node. Alternatively, the first address configuration message may include lease renewal information used to request to renew the first communication address, that is, request to renew an existing communication address. Alternatively, the first address configuration message may include release information indicates to release the first communication address, that is, the second node actively requests to release an existing communication address. Alternatively, the first address configuration message may include second request information used to request to allocate the first communication address for the second node when a current communication address of the second node is unavailable, that is, request to allocate a new communication address for the second node when the current communication address is unavailable. Alternatively, the first address configuration message may include confirmation information indicating to confirm use of the first communication address, namely, indicating to confirm use of the allocated first communication address; or indicating to confirm release of the first communication address. That is, when a packet indicating to release the first communication address is received, the first address configuration message is fed back, to indicate to confirm the release of the first communication address. Different information included in the address configuration message indicates different requests, so that overheads of the address configuration message can be reduced.

Further, the first packet further includes address type indication information indicating a type of the first communication address. For example, the first address configuration message includes the first request information, and the address type indication information indicates a type of a first communication address that is requested to be allocated, so that a node having an address allocation capability allocates the first communication address of the type.

The type of the first communication address may be a first address type or a second address type. The first address type is used for routing and forwarding in a communication domain or is used to identify an application, and the second address type is used to identify an application, and may be an extensible address type, an IPv4 address type, or an IPv6 address type. A communication address used to identify an application may be understood as a service address.

An address length corresponding to the first address type is 2 bytes. When the type of the first communication address is the first address type, compared with another address type, the first address type is concise and shorter, so that more payloads are transmitted in a valid data frame. This improves a payload ratio.

When the type of the first communication address is an Internet Protocol version 4 (Internet Protocol version 4, IPv4) address type or an Internet Protocol version 6 (Internet Protocol version 6, IPv6) address type, a basis is provided for deploying an IP application in a spark link network. When the type of the first communication address is an extensible address type, the first communication address is compatible with a special addressing mode of a special network (for example, Internet of things (Internet of Things, IoT)).

When the first communication address is used to identify an application, the first communication address is specifically used to identify some or all applications on the second node, that is, some or all applications share one service address; or the first communication address is specifically used to identify one application on the second node, that is, one application may correspond to one service address. Alternatively, when the first communication address is an anycast address, and is used to identify an application, the first communication address is specifically used to identify a first application on the second node and the first application on another node. That is, for a service address of the anycast address, same applications deployed on different nodes may share one service address.

Further, the first packet further includes a message type, and the message type indicates whether the first packet includes the first address configuration message, so that the first node may perform an address configuration-related operation when the first packet includes the first address configuration message, and perform another operation when the first packet includes another message. This improves execution efficiency of the first node.

In a possible implementation, the address allocation capability indication information indicates that the first node has the address allocation capability. After the receiving a first packet from the second node, the method further includes: sending a second packet to the second node based on the first packet, where a packet type of the second packet is the same as a packet type of the first packet. The second packet is used to respond to the first packet.

When the first address configuration message in the first packet includes the first request information or the second request information, the second packet may be as follows.

When the first node agrees to allocate the first communication address for the second node, the second packet includes the first communication address, so that the second node learns of the first communication address based on the second packet, and then performs routing and forwarding and/or identifies an application on the second node based on the first communication address. Further, the first node sets a status of the first communication address to an allocated state, to manage the status of the communication address. This reduces a probability of allocating a same communication address for two or more nodes. Further, the second packet further includes a second address configuration message, and the second address configuration message may include consent information indicating that the first communication address has been allocated.

When the first node refuses to allocate the first communication address for the second node, the second packet does not include the first communication address, and includes the second address configuration message. The second address configuration message may include rejection information indicating to reject allocation of the first communication address.

When the first address configuration message in the first packet includes lease renewal information, the second packet may be as follows.

When the first node agrees to renew the first communication address, the second packet includes a lease period of the first communication address, so that the second node updates a lease of the first communication address, and does not need to request the communication address again. This saves address space of the communication address. Further, the second packet further includes a second address configuration message, and the second address configuration message may include consent information indicating that the first communication address has been renewed.

When the first node refuses to renew the first communication address, the second packet includes the second address configuration message, and the second address configuration message may include rejection information indicating to reject renewal of the first communication address.

In a possible implementation, the address allocation capability indication information indicates that the first node has the address allocation proxy capability. After the receiving a first packet from the second node, the method further includes: sending a third packet to a third node based on the first packet, where the third packet includes a third address configuration message, and the third address configuration message is used to allocate or release the first communication address for the second node. A packet type of the third packet is different from a packet type of the first packet.

The third node has an address allocation capability, and the third node is directly connected or not directly connected to the first node.

The third address configuration message may include first request information used to request to allocate the first communication address for the second node, that is, request to allocate a new communication address for the second node. Alternatively, the first address configuration message may include lease renewal information used to request to renew the first communication address, that is, request to renew an existing communication address. Alternatively, the third address configuration message may include release information indicates to release the first communication address, that is, the second node actively requests to release an existing communication address. Alternatively, the third address configuration message may include second request information used to request to allocate the first communication address for the second node when a current communication address of the second node is unavailable, that is, request to allocate a new communication address for the second node when the current communication address is unavailable. Alternatively, the third address configuration message may include confirmation information indicating to confirm use of the first communication address, namely, indicating to confirm use of the allocated first communication address; or indicating to confirm release of the first communication address. That is, when a packet indicating to release the first communication address is received, the first address configuration message is fed back, to indicate to confirm the release of the first communication address. Different information included in the address configuration message indicates different requests, so that overheads of the address configuration message can be reduced.

Further, the third packet further includes address type indication information indicating a type of the first communication address. For example, the third address configuration message includes the first request information, and the address type indication information indicates a type of a first communication address that is requested to be allocated, so that the third node allocates the first communication address of the type.

Further, the third packet further includes a message type, and the message type whether the third packet includes the third address configuration message, so that the third node determines whether the third packet includes the third address configuration message.

Further, after the sending a third packet to a third node, the method further includes: receiving a fourth packet from the third node, where a packet type of the fourth packet is the same as a packet type of the third packet. The fourth packet is used to respond to the third packet.

When the third address configuration message in the third packet includes the first request information or the second request information, the fourth packet may be as follows.

When the third node agrees to allocate the first communication address for the second node, the fourth packet includes the first communication address. Further, the third node sets a status of the first communication address to an allocated state, to manage the status of the communication address. This reduces a probability of allocating a same communication address for two or more nodes. Further, the fourth packet further includes a fourth address configuration message, and the fourth address configuration message may include consent information indicating that the first communication address has been allocated.

When the third node refuses to allocate the first communication address for the second node, the fourth packet does not include the first communication address, and includes the fourth address configuration message. The fourth address configuration message may include rejection information indicating to reject allocation of the first communication address.

When the third address configuration message in the third packet includes lease renewal information, the fourth packet may be as follows.

When the third node agrees to renew the first communication address, the fourth packet includes a lease period of the first communication address. Further, the fourth packet further includes a fourth address configuration message, and the fourth address configuration message may include consent information indicating that the first communication address has been renewed.

When the third node refuses to renew the first communication address, the fourth packet includes the fourth address configuration message, and the fourth address configuration message may include rejection information indicating to reject renewal of the first communication address.

Further, after the receiving a fourth packet from the third node, the method further includes: sending a second packet to the second node based on the fourth packet. A packet type of the second packet is the same as a packet type of the first packet, and is different from the packet type of the fourth packet.

If the fourth packet includes the first communication address, the second packet includes the first communication address.

If the fourth packet includes the fourth address configuration message, and the fourth address configuration message includes the consent information, the second packet includes the second address configuration message, and the second address configuration message includes the consent information. If the fourth packet includes the fourth address configuration message, and the fourth address configuration message includes the rejection information, the second packet includes the second address configuration message, and the second address configuration message includes the rejection information. That is, content of the fourth packet is the same as content of the second packet.

According to a second aspect, this application provides a communication method. The method is applied to a second node, and may be performed by the second node, or may be performed by a module in the second node, for example, performed by a chip, a processor, or the like in the second node. The method may include: receiving address allocation capability indication information from a first node, where the address allocation capability indication information indicates an address allocation capability of the first node.

It can be learned that, the second node learns of the address allocation capability of the first node through the address allocation capability indication information, and does not need to search, by using a broadcast message or a multicast message, for a node having an address allocation capability, so that radio resource overheads and time can be reduced. The second node learns of the address allocation capability of the first node, and may determine whether to initiate an address request to the first node, to reduce unnecessary address request packets, and further reduce radio resource overheads.

Optionally, the address allocation capability indication information specifically indicates that:
if the first node has an address allocation capability, the second node may initiate an address request to the first node, to quickly obtain an allocated communication address;
or if the first node has an address allocation proxy capability, the second node may request, through the first node, a communication address from a node having an address allocation capability, to reduce radio resource overheads;
or if the first node does not have an address allocation capability, the second node does not request a communication address from the first node, and does not request, through the first node, a communication address from a node having an address allocation capability, to reduce unnecessary address request packets.

In a possible implementation, the address allocation capability indication information is carried in a WAP packet. The WAP packet is a packet transmitted in a process of establishing a neighbor relationship. In the process of establishing the neighbor relationship, the address allocation capability indication information is carried in the WAP packet. This can save signaling overheads.

In another possible implementation, the address allocation capability indication information is carried in a WLS packet. When a WLS is deployed in a communication domain to which the first node and the second node belong, the address allocation capability indication information is carried in the WLS packet, so that signaling overheads can be reduced.

In still another possible implementation, the address allocation capability indication information is carried in a non-link-state routing protocol packet. When a non-link-state routing protocol is deployed in the communication domain to which the first node and the second node belong, the address allocation capability indication information is carried in the non-link-state routing protocol packet or a newly defined protocol packet, and may be advertised in a broadcast or multicast manner. Therefore, that a neighboring node learns of the address allocation capability of the first node is not limited.

Optionally, when the address allocation capability indication information indicates that the first node has the address allocation capability, or the first node has the address allocation proxy capability, the method further includes: sending a first packet to the first node based on the address allocation capability indication information, where the first packet includes a first address configuration message, and the first address configuration message is used to allocate or release a first communication address for the second node.

The first address configuration message may include first request information used to request to allocate the first communication address for the second node, that is, request to allocate a new communication address for the second node. Alternatively, the first address configuration message may include lease renewal information used to request to renew the first communication address, that is, request to renew an existing communication address. Alternatively, the first address configuration message may include release information indicates to release the first communication address, that is, the second node actively requests to release an existing communication address. Alternatively, the first address configuration message may include second request information used to request to allocate the first communication address for the second node when a current communication address of the second node is unavailable, that is, request to allocate a new communication address for the second node when the current communication address is unavailable. Alternatively, the first address configuration message may include confirmation information indicating to confirm use of the first communication address, namely, indicating to confirm use of the allocated first communication address; or indicating to confirm release of the first communication address. That is, when a packet indicating to release the first communication address is received, the first address configuration message is fed back, to indicate to confirm the release of the first communication address. Different information included in the address configuration message indicates different requests, so that overheads of the address configuration message can be reduced.

Further, the first packet further includes address type indication information indicating a type of the first communication address. For example, the first address configuration message includes the first request information, and the address type indication information indicates a type of a first communication address that is requested to be allocated, so that a node having an address allocation capability allocates the first communication address of the type.

The type of the first communication address may be a first address type or a second address type. The first address type is used for routing and forwarding in a communication domain or is used to identify an application, and the second address type is used to identify an application, and may be an extensible address type, an IPv4 address type, or an IPv6 address type. A communication address used to identify an application may be understood as a service address.

An address length corresponding to the first address type is 2 bytes. When the type of the first communication address is the first address type, compared with another address type, the first address type is concise and shorter, so that more payloads are transmitted in a valid data frame. This improves a payload ratio.

When the type of the first communication address is an IPv4 address type or an IPv6 address type, a basis is provided for deploying an IP application in a spark link network. When the type of the first communication address is an extensible address type, the first communication address is compatible with a special addressing mode of a special network (for example, IOT).

When the first communication address is used to identify an application, the first communication address is specifically used to identify some or all applications on the second node, that is, some or all applications share one service address; or the first communication address is specifically used to identify one application on the second node, that is, one application may correspond to one service address. Alternatively, when the first communication address is an anycast address, and is used to identify an application, the first communication address is specifically used to identify a first application on the second node and the first application on another node. That is, for a service address of the anycast address, same applications deployed on different nodes may share one service address.

Further, the first packet further includes a message type, and the message type indicates whether the first packet includes the first address configuration message, so that the first node may perform an address configuration-related operation when the first packet includes the first address configuration message, and perform another operation when the first packet includes another message. This improves execution efficiency of the first node.

Further, after the sending a first packet to the first node, the method further includes: receiving a second packet from the first node, where a packet type of the second packet is the same as a packet type of the first packet. The second packet is used to respond to the first packet.

When the first address configuration message in the first packet includes the first request information or the second request information, the second packet may be as follows.

When the first node agrees to allocate the first communication address for the second node, the second packet includes the first communication address, so that the second node learns of the first communication address based on the second packet, and then performs routing and forwarding and/or identifies an application on the second node based on the first communication address. Further, the first node sets a status of the first communication address to an allocated state, to manage the status of the communication address. This reduces a probability of allocating a same communication address for two or more nodes. Further, the second packet further includes a second address configuration message, and the second address configuration message may include consent information indicating that the first communication address has been allocated.

When the first node refuses to allocate the first communication address for the second node, the second packet does not include the first communication address, and includes the second address configuration message. The second address configuration message may include rejection information indicating to reject allocation of the first communication address.

When the first address configuration message in the first packet includes lease renewal information, the second packet may be as follows.

When the first node agrees to renew the first communication address, the second packet includes a lease period of the first communication address, so that the second node updates a lease of the first communication address, and does not need to request the communication address again. This saves address space of the communication address. Further, the second packet further includes a second address configuration message, and the second address configuration message may include consent information indicating that the first communication address has been renewed.

When the first node refuses to renew the first communication address, the second packet includes the second address configuration message, and the second address configuration message may include rejection information indicating to reject renewal of the first communication address.

Optionally, when the second node has an address allocation proxy capability, and the address allocation capability indication information indicates that the first node has an address allocation capability, the method further includes: receiving a seventh packet from a fourth node, where the seventh packet includes a seventh address configuration message, and the seventh address configuration message is used to allocate or release a second communication address for the fourth node.

The fourth node is directly connected to the second node, and the second node may notify, through the address allocation capability indication information, the fourth node that the second node has the address allocation proxy capability. The seventh packet is similar to the first packet in the first aspect. For details, refer to the specific description of the first packet in the first aspect. Details are not described herein again.

Further, after the receiving a seventh packet, the method further includes: sending an eighth packet to the first node based on the seventh packet. The eighth packet is similar to the third packet in the first aspect. For details, refer to the specific description of the first packet in the first aspect. Details are not described herein again.

Further, after the sending an eighth packet to the first node, the method further includes: receiving a ninth packet from the first node. The ninth packet is similar to the fourth packet in the first aspect. For details, refer to the specific description of the fourth packet in the first aspect. Details are not described herein again.

Further, after the receiving a ninth packet from the first node, the method further includes: sending a tenth packet to the fourth node based on the ninth packet. The eighth packet is similar to the second packet in the first aspect. For details, refer to the specific description of the second packet in the first aspect. Details are not described herein again.

Optionally, the method further includes: sending a query request message to a fifth node, where the query request message includes a third communication address, a type of the third communication address is the second address type, the query request message is used to request to query a fourth communication address corresponding to the third communication address, and a type of the fourth communication address is the first address type. The fifth node may provide a mapping query function.

According to a third aspect, this application provides a communication apparatus, where the communication apparatus includes a module or a unit configured to perform the method according to any one of the first aspect or the second aspect.

In a possible design, the communication apparatus includes:
a processing unit, configured to generate address allocation capability indication information; and
a communication unit, configured to send the address allocation capability indication information to a second node, where the address allocation capability indication information indicates an address allocation capability of a first node.

Optionally, the address allocation capability indication information indicates that the first node has an address allocation capability, the address allocation capability indication information indicates that the first node does not have an address allocation capability, or the address allocation capability indication information indicates that the first node has an address allocation proxy capability.

Optionally, the address allocation capability indication information is carried in a wireless adjacency protocol packet.

Optionally, the address allocation capability indication information is carried in a link-state routing protocol packet; or the address allocation capability indication information is carried in a non-link-state routing protocol packet.

Optionally, the communication unit is further configured to receive a first packet from the second node, where the first packet includes a first address configuration message, and the first address configuration message is used to allocate or release a first communication address for the second node.

Optionally, the first address configuration message includes at least one of the following:
first request information, where the first request information is used to request to allocate the first communication address for the second node;
lease renewal information, where the lease renewal information is used to request to renew the first communication address;
release information, where the release information indicates to release the first communication address;
second request information, where the second request information is used to request to allocate the first communication address for the second node when a current communication address of the second node is unavailable; and
confirmation information, where the confirmation information indicates to confirm use of the first communication address or confirm release of the first communication address.

Optionally, the first packet further includes address type indication information, and the address type indication information indicates a type of the first communication address.

Optionally, the type of the first communication address is a first address type or a second address type, and the second address type is an extensible address type, an IPv4 address type, or an IPv6 address type.

Optionally, the first address type is used for routing and forwarding in a communication domain or is used to identify an application, and an address length corresponding to the first address type is 2 bytes; and the second address type is used to identify an application.

Optionally, when the first communication address is used to identify an application, the first communication address is specifically used to identify some or all applications on the second node, or is specifically used to identify one application on the second node; or when the first communication address is an anycast address, and is used to identify an application, the first communication address is specifically used to identify a first application on the second node and the first application on another node.

Optionally, the first packet further includes a message type, and the message type indicates whether the first packet includes the first address configuration message.

Optionally, the address allocation capability indication information indicates that the first node has the address allocation capability. The communication unit is further configured to send a second packet to the second node based on the first packet, where a packet type of the second packet is the same as a packet type of the first packet.

Optionally, the second packet includes the first communication address.

Optionally, the processing unit is further configured to set a status of the first communication address to an allocated state.

Optionally, the second packet includes a second address configuration message, and the second address configuration message includes at least one of the following:
consent information, where the allocation information indicates that the first communication address has been allocated or the first communication address has been renewed; and
rejection information, where the rejection information indicates to reject allocation of the first communication address or reject renewal of the first communication address.

Optionally, the address allocation capability indication information indicates that the first node has the address allocation proxy capability. The communication unit is further configured to send a third packet to a third node based on the first packet, where the third packet includes a third address configuration message, and the third address configuration message is used to allocate or release the first communication address for the second node.

Optionally, the third address configuration message includes at least one of the following:
first request information, where the first request information is used to request to allocate the first communication address for the second node;
lease renewal information, where the lease renewal information is used to request to renew the first communication address;
release information, where the release information indicates to release the first communication address;
second request information, where the second request information is used to request to allocate the first communication address for the second node when a current communication address of the second node is unavailable; and
confirmation information, where the confirmation information indicates to confirm use of the first communication address or confirm release of the first communication address.

Optionally, the third packet further includes address type indication information, and the address type indication information indicates a type of the first communication address.

Optionally, the third packet further includes a message type, and the message type indicates whether the third packet includes the third address configuration message.

Optionally, a packet type of the third packet is different from a packet type of the first packet.

Optionally, the communication unit is further configured to receive a fourth packet from the third node, where a packet type of the fourth packet is the same as a packet type of the third packet.

Optionally, the fourth packet includes the first communication address.

Optionally, the fourth packet includes a fourth address configuration message, and the fourth address configuration message includes at least one of the following:
consent information, where the allocation information indicates that the first communication address has been allocated or the first communication address has been renewed; and
rejection information, where the rejection information indicates to reject allocation of the first communication address or reject renewal of the first communication address.

Optionally, the communication unit is further configured to send a second packet to the second node based on the fourth packet, where a packet type of the second packet is the same as a packet type of the first packet.

Optionally, the second packet includes the first communication address.

Optionally, the second packet includes a second address configuration message, and the second address configuration message includes at least one of the following:
consent information, where the allocation information indicates that the first communication address has been allocated or the first communication address has been renewed; and
rejection information, where the rejection information indicates to reject allocation of the first communication address or reject renewal of the first communication address.

For technical effects brought by any one of the third aspect and the possible implementations, refer to descriptions of technical effects corresponding to the first aspect and the corresponding implementations.

In another possible design, the communication apparatus includes:
a communication unit, configured to receive address allocation capability indication information from a first node, where the address allocation capability indication information indicates an address allocation capability of the first node.

Optionally, the address allocation capability indication information indicates that the first node has an address allocation capability, the address allocation capability indication information indicates that the first node does not have an address allocation capability, or the address allocation capability indication information indicates that the first node has an address allocation proxy capability.

Optionally, the communication unit is further configured to send a first packet to the first node based on the address allocation capability indication information, where the first packet includes a first address configuration message, and the first address configuration message is used to allocate or release a first communication address for the second node.

Optionally, the communication unit is further configured to receive a second packet from the first node, where a packet type of the second packet is the same as a packet type of the first packet.

Optionally, the second packet includes the first communication address.

For technical effects brought by any one of the third aspect and the possible implementations, refer to descriptions of technical effects corresponding to the second aspect and the corresponding implementations.

According to a fourth aspect, an embodiment of this application provides a communication apparatus, including a processor. The processor is coupled to a memory, and may be configured to execute instructions in the memory, to implement the method in any one of the first aspect and the second aspect and any one of the possible implementations of the first aspect and the second aspect. Optionally, the communication apparatus further includes the memory. Optionally, the communication apparatus further includes a communication interface, and the processor is coupled to the communication interface.

According to a fifth aspect, an embodiment of this application provides a communication apparatus, including a logic circuit and a communication interface. The communication interface is configured to receive information or send information. The logic circuit is configured to receive information or send information through the communication interface, so that the communication apparatus performs the method in any one of the first aspect and the second aspect and any one of the possible implementations of the first aspect and the second aspect.

According to a sixth aspect, an embodiment of this application provides a computer-readable storage medium, where the computer-readable storage medium is configured to store a computer program (which may also be referred to as code or instructions). When the computer program is run on a computer, the method in any one of the first aspect and the second aspect and any one of the possible implementations of the first aspect and the second aspect are implemented.

According to a seventh aspect, an embodiment of this application provides a computer program product, where the computer program product includes a computer program (which may also be referred to as code or instructions). When the computer program is run, a computer is enabled to perform the method in any one of the first aspect and the second aspect and any one of the possible implementations of the first aspect and the second aspect.

According to an eighth aspect, an embodiment of this application provides a chip, where the chip includes a processor, the processor is configured to execute instructions, and when the processor executes the instructions, the chip is enabled to perform the method in any one of the first aspect and the second aspect and any one of the possible implementations of the first aspect and the second aspect. Optionally, the chip further includes a communication interface, and the communication interface is configured to receive a signal or send a signal.

According to a ninth aspect, an embodiment of this application provides a terminal device, where the terminal device includes at least one of the communication apparatus according to the third aspect, the communication apparatus according to the fourth aspect, the communication apparatus according to the fifth aspect, or the chip according to the eighth aspect.

According to a tenth aspect, an embodiment of this application provides a system, where the system includes a terminal device and at least one of the communication apparatus according to the third aspect, the communication apparatus according to the fourth aspect, the communication apparatus according to the fifth aspect, or the chip according to the eighth aspect.

In addition, in a process of performing the method according to the first aspect and any possible implementation, or the method according to the second aspect and any possible implementation, a process of sending information and/or receiving information and the like in the foregoing method may be understood as a process of outputting information by the processor and/or a process of receiving input information by the processor. When outputting the information, the processor may output the information to a transceiver (or a communication interface or a sending module), so that a transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to the first aspect and any possible implementation, or the method according to the second aspect and any possible implementation, the processor may be a processor specially configured to perform these methods, or may be a processor that executes these methods by executing computer instructions in a memory, for example, a general purpose processor. The memory may be a non-transitory (non-transitory) memory, for example, a read only memory (read only memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside the apparatus.

In still another possible implementation, the at least one memory is located in the apparatus.

In still another possible implementation, a part of the at least one memory is located in the apparatus, and the other part of the at least one memory is located outside the apparatus.

In this application, the processor and the memory may alternatively be integrated into one component, that is, the processor and the memory may alternatively be integrated.

In this application, the first node notifies the second node of the address allocation capability of the first node through the address allocation capability indication information, and the second node does not need to search, by using a broadcast message or a multicast message, for a node having an address allocation capability, so that radio resource overheads and time can be reduced. The second node learns of the address allocation capability of the first node, so that the second node determines whether to initiate an address request to the first node, to reduce unnecessary address request packets, and further reduce radio resource overheads.

### BRIEF DESCRIPTION OF DRAWINGS

FIG. 1 is an example diagram of several topologies of communication domains;
FIG. 2 is an example diagram of a wireless BMS scenario;
FIG. 3 is an example diagram of a smart home scenario;
FIG. 4 is an example diagram of a topology of a mesh network according to this application;
FIG. 5 is a schematic diagram of a possible wireless communication system according to this application;
FIG. 6 is a schematic flowchart of a communication method according to this application;
FIG. 6-1 is an example diagram of a Node Capability TLV according to this application;
FIG. 7 is a schematic flowchart of another communication method according to this application;
FIG. 7-1 is an example diagram of a GMP format according to this application;
FIG. 7-2 is an example diagram of a format of an address configuration message according to this application;
FIG. 7-3 is an example diagram of a TLV of an address configuration message according to this application;
FIG. 7-4 is an example diagram of address information according to this application;
FIG. 8A and FIG. 8B are a schematic flowchart of still another communication method according to this application;
FIG. 9 is a schematic flowchart of still another communication method according to this application;
FIG. 10 is a schematic flowchart of still another communication method according to this application;
FIG. 11 is a schematic diagram of a structure of a communication apparatus according to an embodiment of this application;
FIG. 12 is a schematic diagram of a structure of a communication apparatus according to an embodiment of this application; and
FIG. 13 is a schematic diagram of a structure of a chip according to an embodiment of this application.

### DESCRIPTION OF EMBODIMENTS

In this application, words such as "first" and "second" are used to distinguish same items or similar items with basically same functions and effects. A person skilled in the art may understand that the words "first" and "second" do not limit a quantity or an execution sequence, and the words "first" and "second" are not necessarily limited to be different. A term "and/or" describes an association relationship for describing associated objects and indicates that three relationships may exist. For example, A and/or B may indicate the following three cases: Only A exists, both A and B exist, and only B exists. A character "/" generally indicates an "or" relationship between the associated objects.

It should be understood that in this application, "at least one " means one or more, and "a plurality of" means two or more. In addition, "equal to" in this application may be used together with "greater than", or may be used together with "less than". When "equal to" and "greater than" are used together, a technical solution of "greater than" is adopted. When "equal to" and "less than" are used together, a technical solution of "less than" is adopted.

The following first describes related names or terms in this application, to facilitate understanding by a person skilled in the art.

### 1. Node (node)

The node is an electronic device having a communication capability, and is also referred to as a communication node. For example, the node may include an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus, or may be a component (for example, a chip or an integrated circuit) included in the independent device. The node may be any possible intelligent terminal device (for example, a mobile phone), intelligent transportation device (for example, a vehicle or an uncrewed aerial vehicle), intelligent manufacturing device, smart home device (for example, a large screen, a sound box, or a printer), or the like.

For example, when the node is a vehicle-mounted device, the node may be a vehicle cockpit (cockpit domain) device, or a module in the vehicle cockpit device, for example, one or more of modules such as a cockpit domain controller (cockpit domain controller, CDC), a camera, a screen, a microphone, a speaker, an electronic key, or a passive entry passive start system controller. In a vehicle, the node may also be a wireless battery management system, or a battery management unit (battery management unit, BMU) or a battery control unit (battery control unit, BCU) in the wireless battery management system.

For example, when the node is a handheld terminal, the node may be a mobile phone (mobile phone), a wearable device, a tablet computer (pad), a computer with a data sending and receiving function (like a notebook computer or a palmtop computer), or the like.

The node in this application may be applied to a plurality of application scenarios, for example, the following application scenarios: a mobile internet (mobile internet, MI), industrial control (industrial control), self-driving (self-driving), transportation safety (transportation safety), Internet of things (Internet of Things, IoT), a smart city (smart city), and a smart home (smart home).

The node in this application may be used in a plurality of network types, for example, applied to one or more of the following network types: a spark link (Spark Link) network, a long term evolution (long term evolution, LTE) network, a 5th-generation mobile communication technology (5th-generation mobile communication technology, 5G), a wireless local area network (for example, Wi-Fi), Bluetooth (Bluetooth, BT), Zigbee (Zigbee), or a vehicle-mounted short-range wireless communication network.

In some application scenarios or some network types, names of devices having similar communication capabilities may not be referred to as nodes. However, for ease of description, devices having communication capabilities are collectively referred to as nodes in embodiments of this application.

### 2. Communication domain

A communication system (for example, a spark link communication system) usually includes a plurality of nodes, and the nodes may communicate with each other to transmit data. A vehicle-mounted communication system is used as an example. A plurality of communication domains may exist in a vehicle. The communication domain is a system that includes a group of nodes that have a communication relationship and a communication connection relationship (namely, a communication link) between communication nodes, and is usually used to implement a specific function. For example, one communication domain may include one primary node and at least one secondary node, and a primary node and a secondary node, or a primary node and a primary node, or a secondary node and a secondary node may communicate with each other. The primary node may manage the secondary node, has a resource allocation function, and is responsible for allocating resources for the secondary node. The secondary node obeys scheduling of the primary node, and communicates with the primary node and/or with another node by using resources allocated by the primary node. For a communication domain, any two nodes in the communication domain may communicate based on a communication address.

In some specific implementation scenarios, the primary node may also be referred to as a management (grant, G) node, a G node, or a control node, and the secondary node may also be referred to as a terminal (terminal, T) or a T node. A communication link from the G node to the T node may be referred to as a G link or a downlink, and a communication link from the T node to the G node may be referred to as a T link or an uplink.

### 3. Topology of a communication domain

For a communication domain, a topology of the communication domain may be a single-hop star topology, a three-layer multi-hop tree topology, a multi-hop tree topology, or the like.

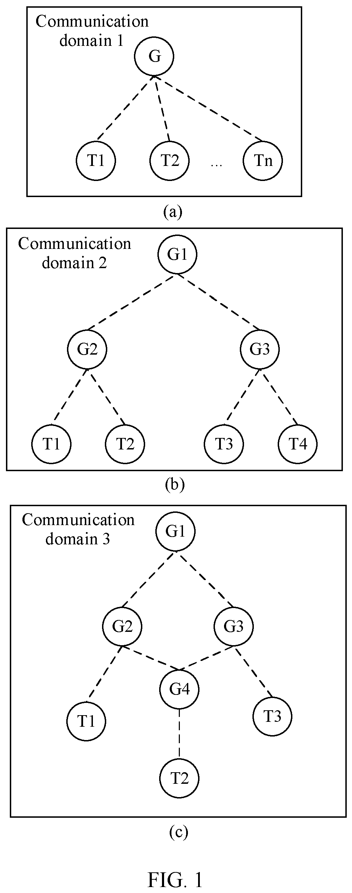

For example, refer to a single-hop star topology shown in (a) in FIG. 1. In (a) in FIG. 1, a communication domain 1 includes a G node and a plurality of T nodes (for example, a T1 node, a T2 node, ..., and a Tn node), and each T node is connected to the G node. Communication between the G node and the T node may be bidirectional unicast, or may be G->T broadcast communication.

Optionally, a structure shown in (a) in FIG. 1 is applicable to an in-vehicle communication scenario. For example, in the in-vehicle communication scenario, the G node may be a telematics box (Telematics BOX, T-BOX), the T node may be a user terminal in a vehicle, and the user terminal may be, for example, a mobile phone, a headset, a speaker, or a vehicle-mounted device. The T-BOX may also be referred to as a remote vehicle-mounted terminal or a vehicle-to-everything communication terminal. For example, the T-BOX may establish a communication connection to the mobile phone, to implement control such as opening a door, locking a door, controlling a vehicle window, and turning on and off an air conditioner.

For example, refer to a three-layer multi-hop tree topology shown in (b) in FIG. 1. In (b) in FIG. 1, a communication domain 2 includes a G1 node, a G2 node, a G3 node, a T1 node, a T2 node, a T3 node, and a T4 node, where the T1 node and the T2 node are connected to the G2 node, the T3 node and the T4 node are connected to the G3 node, and the G2 node and the G3 node are connected to the G1 node.

The G1 node may be used as a general management node, and the G2 node and the G3 node may be nodes having dual identities. The G2 node is used as an example. For communication between the G2 node and the G1 node, the G2 node may be used as a T node, and the G1 node may be used as a G node. For communication between the G2 node and the T1 node, the G2 node may be used as a G node, and the T1 node may be used as a T node. The node having dual identities may be indicated as G(T). In this case, the G2 node may be indicated as G2(T), and the G3 node may be indicated as G3(T). For the three-layer multi-hop tree topology, communication between the G node and the T node may be bidirectional unicast (for example, bidirectional unicast between the G1 node and the T1 node may be indicated as G1-G2(T)-T1), or may be broadcast (for example, G1->G2(T)->T).

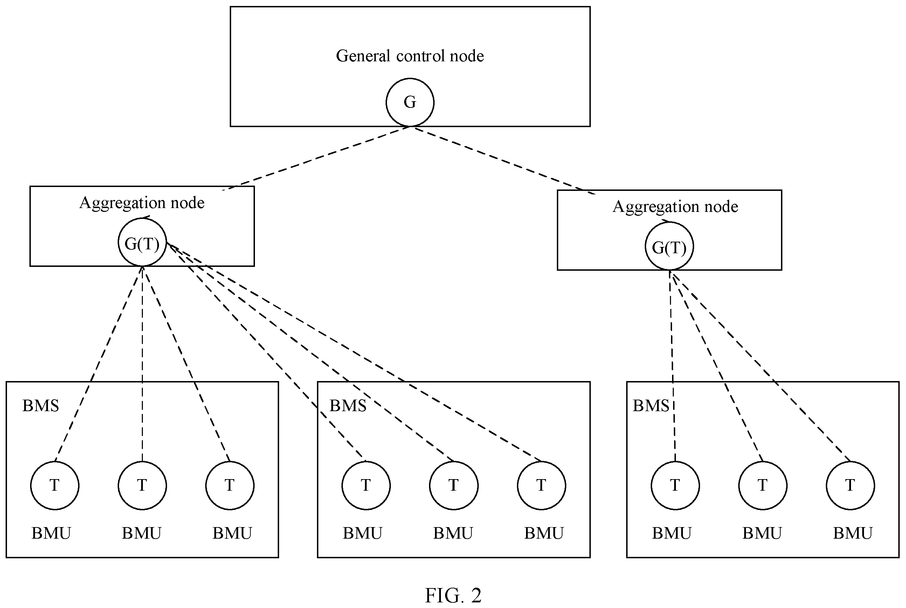

Optionally, the structure shown in (b) in FIG. 1 is applicable to a wireless BMS scenario. For the wireless BMS scenario, refer to FIG. 2. In FIG. 2, a general control node is used as a general management node, an aggregation node is a node having dual identities, and a BMU in a BMS is used as a T node. A BCU in the BMS may be used as a G node, the BCU does not work, and the BMU continues to work. Therefore, the BCU is not shown in FIG. 2. The structure shown in (b) in FIG. 1 is further applicable to a battery pack/cell storage scenario and the like.

For example, refer to a multi-hop tree topology shown in (c) in FIG. 1. In (c) in FIG. 1, a communication domain 2 includes a G1 node, a G2 node, a G3 node, a G4 node, a T1 node, a T2 node, and a T3 node, where the T1 node is connected to the G2 node, the T2 node is connected to the G4 node, the G4 node may be connected to the G2 node and the G3 node, the G2 node is connected to the G1 node, and the G3 node is connected to the G1 node. The G1 node may be used as a general management node, and the G2 node, the G3 node, and the G4 node may be nodes having dual identities.

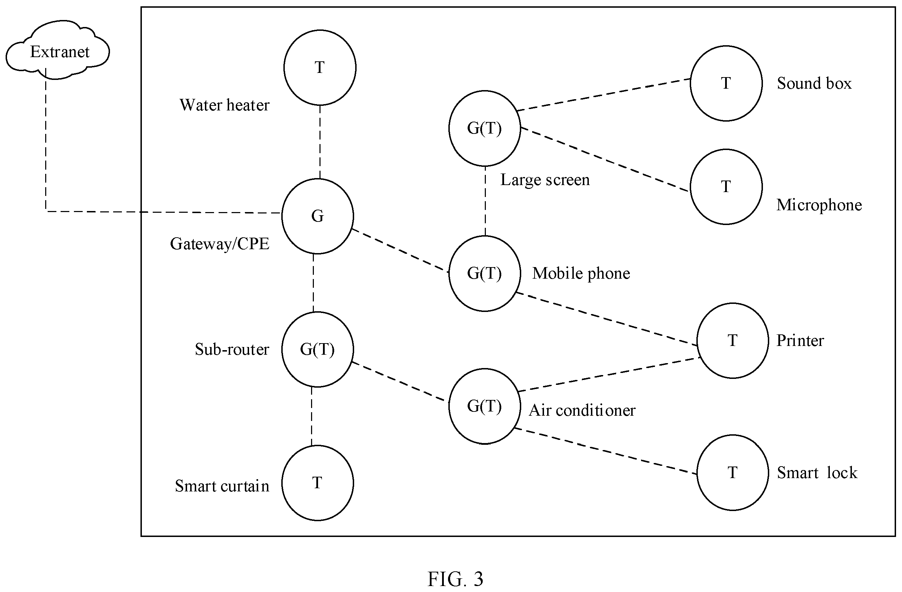

Optionally, the structure shown in (c) in FIG. 1 is applicable to a smart home scenario. For the smart home scenario, refer to FIG. 3. In FIG. 3, gateway/customer premises equipment (customer premises equipment, CPE) is used as a general management node, a sub-router, a large screen, a mobile phone, and an air conditioner are nodes having dual identities, and a water heater, a smart curtain, a sound box, a microphone, a printer, and a smart lock are used as T nodes. In the smart home scenario, the T node may have an IP address (for example, the printer in FIG. 3 has an IP address), or may have no IP address (for example, the water heater, the smart curtain, and the smart lock in FIG. 3 have no IP address); and a G(T) node may have an IP address (for example, the sub-router in FIG. 3 has an IP address), or may have no IP address (for example, the air conditioner in FIG. 3 has no IP address). The structure shown in (c) in FIG. 1 is also applicable to a large-scale sensor network with low power consumption. For example, in the large-scale sensor network with low power consumption, a root (root) node may be used as a general management node, a backbone node may be used as G(T), and a leaf node may be used as the T node.

The following describes an application scenario and a system architecture of this application.

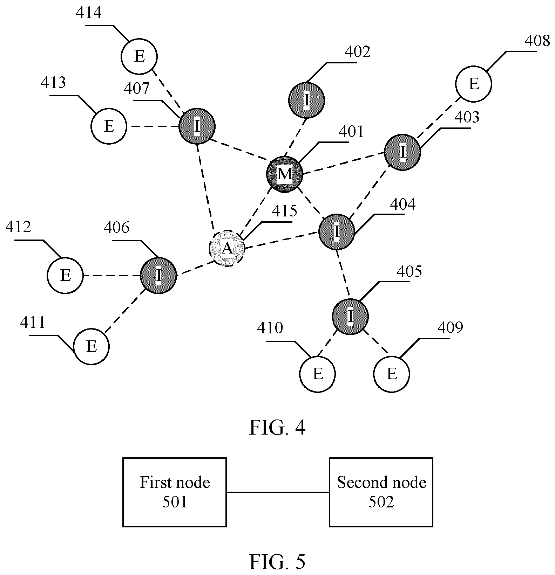

FIG. 4 is an example diagram of a topology of a mesh (mesh) network according to this application. The topology shown in FIG. 4 includes an M node 401, an I node 402 to an I node 407, and an E node 408 to an E node 414. Optionally, the topology further includes an A node 415. It should be noted that a quantity of nodes shown in FIG. 4 is used as an example, and does not constitute a limitation on this application.

The I node is an intermediate node or an intermediate routing node, may be understood as an address allocator, an address resolver, or an address requestor, or may be understood as a data packet sender or receiver, and has a data packet forwarding capability in a network. The I node may be, for example, a wireless intermediate system (wireless intermediate system, WIS) node. As an address allocator, the I node has an address allocation capability or an address allocation proxy capability. The address allocation capability indicates that the I node can allocate an address, and the address allocation proxy capability indicates that the I node cannot allocate an address, but can relay an address request and address allocation for another node. As an address requestor, the I node may request a communication address for the I node. The I node may further serve as an address request agent, and may request a communication address for another node (for example, an adjacent node).

The E node is an end node, and may be understood as an address requestor, or may be understood as a data packet sender or receiver, but does not have a data packet forwarding capability in a network. The E node may be, for example, a wireless end system (wireless end system, WES) node. The I node and the E node are physical nodes or physical units, and may be understood as nodes or units that actually exist.

The M node 401 plays a role of a manager (Manager), and is injected with an allocable address type and address space during network initialization. The M node 401 is mainly responsible for address allocation. Considering reliability of network management, one or more backup M nodes may exist in the network. The M node is a function node, a function unit, a logical node, or a logical unit, and may be understood as a virtual node or unit. A function of the M node 401 may be implemented by using an I node, that is, the I node has an address allocation capability, and the M node is essentially the I node. The M node may also be described as a Manager node.

The A node 415 is an address resolver (Address Resolver) node, and mainly provides a mapping query function, for example, a mapping query function between a non-spark link network address and a spark link network address (Spark Link Network Address, SLNA). Two parties communicating with each other by using the non-spark link network address may query the A node 415 for the spark link network address of each other, to construct a spark link network layer packet based on the spark link network address, and perform addressing and forwarding by using the spark link network address. The A node is a function node, a function unit, a logical node, or a logical unit, and may be understood as a virtual node or unit. A function of the A node 415 may be implemented by using an I node, that is, the I node has a mapping query function, and the A node is essentially the I node. The A node may also be described as an address resolver node.

It should be noted that an I node may have a function of the M node, and may further have a function of the A node; or an I node has a function of the M node, and another I node has a function of the A node.

It may be understood that the network shown in FIG. 4 may be a communication domain, and the several topologies shown in FIG. 1 may be a subset of the topology shown in FIG. 4. For example, the G1 node, the G2 node, and the G3 node in (b) in FIG. 1 may be the I node in FIG. 4, the T1 node to the T4 node in (b) in FIG. 1 may be the E node in FIG. 4, and the G1 node may have a function of the M node. Further, the general control node and the aggregation node in FIG. 2 may be used as the I node, and the general control node may have a function of the M node. The BMU can function as the E node and request a communication address from the general control node. The gateway/CPE, the sub-router, the large screen, the mobile phone, and the air conditioner in FIG. 3 may be used as the I node, and the gateway/CPE may have a function of the M node. The water heater, the smart curtain, and the intelligent lock may be used as the E node, and request a communication address from the gateway/CPE.

Further, this embodiment of this application may be applied to an in-vehicle communication scenario, a wireless BMS scenario (as shown in FIG. 2), a battery pack/cell storage scenario, a smart home scenario (as shown in FIG. 3), and intelligent application scenarios such as a smart cockpit, smart driving, smart manufacturing, and smart transportation.

An example in which communication nodes include a first node and a second node is used. FIG. 5 is a schematic diagram of a possible wireless communication system according to this application. The wireless communication system includes a first node 501 and a second node 502. That one communication domain includes one M node is used as an example. A combination manner of the first node 501 and the second node 502 may be any one of the following manners.

Manner 1: The first node 501 has a function of the M node, and the second node 502 is a node directly connected to the first node 501, and may be an I node or an E node. The second node 502 may request a communication address of the second node 502 from the first node 501.

Manner 2: The wireless communication system shown in FIG. 5 further includes a third node having a function of the M node. The third node is directly connected or not directly connected to the first node 501 having an address allocation agent capability, and the second node 502 configured to request the communication address is directly connected to the first node 501. The first node 501 may request a communication address from the third node for the second node 502. The first node 501 may be an I node, and the second node 502 may be an I node or an E node.

Manner 3: The wireless communication system shown in FIG. 5 further includes a third node configured to request a communication address, the third node is directly connected to the second node 502 having an address allocation agent capability, and the second node 502 is directly connected or not directly connected to the first node 501 having a function of the M node. The second node 502 may request a communication address form the first node 501 for the third node. The second node 502 may be an I node, and the third node may be an I node or an E node.

It should be understood that the wireless communication system may further include more nodes. For ease of description, the nodes are shown as the first node and the second node herein.

For a communication domain, there is no specific solution to how adjacent nodes learn of an address allocation capability of each other. Therefore, this application provides a communication method and apparatus, to indicate an address allocation capability of a node, to allocate a communication address. Before the communication method is described, the communication address provided in this application is described.

This application provides the following types of communication address.
(1) A spark link network address (SLNA) is used for routing and forwarding in a communication domain. In other words, routing and forwarding are performed based on the SLNA in the communication domain. To be specific, each node in the communication domain needs to be configured with the SLNA, and the SLNA may be considered as a default address type. The SLNA can also be understood as an address that can be managed by a network. The SLNA may also be described as a spark link base (base) address or a base address. The SLNA may also be used to identify an application, that is, serve as a service address. For example, a type of the SLNA is referred to as type 1 (type 1), and a byte length of the SLNA is 2 bytes.
(2) An extensible address is used to identify an application, that is, serves as a service address. The extensible address can be understood as a user-defined address type with a variable byte length of 1 byte to 16 bytes. For example, a type of the extensible address is referred to as type 2 (type 2).
(3) An IPv4 address is used to identify an application, that is, serves as a service address. A maximum byte length of the IPv4 address is 4 bytes. For example, a type of the IPv4 address is referred to as type 4 (type 4).
(4) An IPv6 address is used to identify an application, that is, serves as a service address. A maximum byte length of the IPv6 address is 16 bytes. For example, a type of the IPv6 address is referred to as type 6 (type 6).

Identifying an application may describe identifying an application service or the like. Addresses of the four types can be used as service addresses. For ease of differentiation, in this application, the type of the spark link network address is used as a first address type, and the types of the extensible address, the IPv4 address, and the IPv6 address are used as second address types, namely, non-spark link network addresses.

The SLNA can be classified into unicast, multicast, broadcast, and anycast types. For example, address ranges corresponding to different types are as follows:
a. Unicast: An address ranges from 0.0 to 127.255, where
   - 0.0 is not used as a communication address of a node but as a default routing address in network routing addressing;
   - 127.1 is used as a local loopback address (loopback address);
   - 127.2 is used as a default unicast address of all M nodes (Manager Node Anycast Address);
   - 127.3 is used as a default unicast address of all A nodes (Address Resolver Node Anycast Address); and
   - 127.4 to 127.255 is reserved for future use.
b. Multicast: An address ranges from 128.0 to 200.255, where
   - 128.0 is used as a multi-hop multicast address listened to by all M nodes (All Manager Nodes Multicast Address);
   - 128.1 is used as a multi-hop multicast address listened to by all A nodes (All Address Resolver Nodes Multicast Address);
   - 128.2 is used as a multi-hop multicast address listened to by all intermediate nodes (All WIS Nodes Multicast Address);
   - 128.3 is used as a multi-hop multicast address listened to by all end nodes (All WES Nodes Multicast Address);
   - 128.4 is used as a single-hop multicast address listened to by an intermediate node within a link local (link local) range (Link Local WIS Nodes Multicast Address);
   - 128.5 is used as a single-hop multicast address listened to by an end node within a link local (link local) range (Link Local WES Nodes Multicast Address); and
   - 128.6 to 128.255 is reserved for protocol extension.
c. Broadcast: A broadcast address is 255.255.
d. Reservation: An address ranges from 201.0 to 255.254.

For a node in the communication domain, the node may request a separate service address for an application of the node, or may reuse an SLNA of the node, or a plurality of applications may share one service address. Same applications deployed on different nodes may use a same service address, and the service address is an anycast address (anycast address). The application uses advertisement and subscription modes. A plurality of nodes can request a same multicast address.

The following describes the communication method provided in this application.

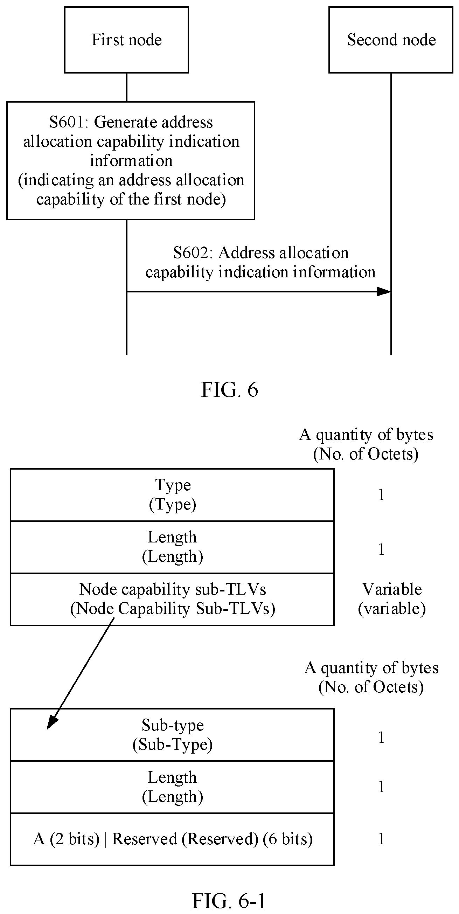

FIG. 6 is a schematic flowchart of a communication method according to this application. The method may include but is not limited to the following steps.

S601: A first node generates address allocation capability indication information.

The address allocation capability indication information indicates an address allocation capability of the first node, for example, indicates whether the first node has an address allocation capability, or whether the first node has an address allocation proxy capability. Further, the address allocation capability indication information indicates that the first node has an address allocation capability, or indicates that the first node does not have an address allocation capability, or indicates that the first node has an address allocation proxy capability. If the first node has an address allocation capability, it indicates that the first node can allocate an address for another node, for example, can allocate an SLNA or a service address for the another node. If the first node has an address allocation proxy capability, it indicates that the first node cannot allocate an address for another node, but can relay an address request, address allocation, and the like for another node. If the first node does not have an address allocation capability, it indicates that the first node cannot allocate an address for another node, and cannot relay an address request and address allocation for the another node.

For example, the address allocation capability indication information may be indicated by using a 2-bit (bits) value. For example, if the 2-bit value is 00, it indicates that the first node does not have an address allocation capability; if the 2-bit value is 01, it indicates that the first node has an address allocation capability; if the 2-bit value is 10, it indicates that the first node has an address allocation proxy capability; and if the 2-bit value is 11, it indicates that reservation is performed.

Optionally, the first node may generate the address allocation capability indication information based on whether the first node has the address allocation capability.

S602: The first node sends the address allocation capability indication information to a second node. Correspondingly, the second node receives the address allocation capability indication information from the first node.

The second node is directly connected to the first node. That is, the second node is a neighboring node of the first node. That the first node sends the address allocation capability indication information to a second node may be understood as that the first node notifies the second node of the address allocation capability of the first node through the address allocation capability indication information. Adjacent nodes notify each other of an address allocation capability based on address allocation capability indication information, to determine whether to initiate an address request.

In a first implementation, the address allocation capability indication information is carried in a wireless adjacency protocol (wireless adjacency protocol, WAP) packet. The packet may also be described as a protocol data unit (protocol data unit, PDU). That is, in a process of establishing a neighbor relationship between the first node and the second node, the first node sends a WAP PDU to the second node. The WAP PDU carries the address allocation capability indication information. Optionally, the WAP PDU may be a hello PDU. The hello PDU includes a node capability (Node Capability) type-length-value (type-length-value, TLV). For a definition of the Node Capability TLV, refer to FIG. 6-1.

For example, as shown in FIG. 6-1, the definition of the Node Capability TLV may include at least one of the following:
- type (Type), having a byte length of 1 byte and indicating a type of the Node Capability TLV, for example, type 4;
- length (Length), having a byte length of 1 byte, indicating a length of the Node Capability TLV, and ranging from 0 to 255; and
- node capability sub-TLV (Node Capability Sub-TLV), having a variable (variable) byte length and indicating an extensible node capability set.

It should be noted that the Node Capability TLV appears only once in the hello PDU. The hello PDU sent by the first node (the I node or the E node) has only one Node Capability TLV. If the hello PDU received by the second node (the I node or the E node) has more than one Node Capability TLVs, the second node discards the hello PDU.

The extensible node capability set may include sub-TLVs of one or more nodes. For example, a Node General Capability Sub-TLV may include address allocation capability indication information. The Node General Capability Sub-TLV may indicate a Node General Capability Sub-TLV of a first node. A Node General Capability Sub-TLV definition may include at least one of the following:
- sub-type (Sub-Type), having a byte length of 1 byte and indicating a type of the Node General Capability Sub-TLV, for example, type 1;
- length (Length), having a byte length of 1 byte, indicating a length of the Node General Capability Sub-TLV, and ranging from 0 to 255; and
- A field, occupying 2 bits, where a value of the 2 bits indicates address allocation capability indication information. For example, if the value is 00, it indicates that there is no address allocation capability; if the value is 01, it indicates that there is an address allocation capability; if the value is 10, it indicates that there is an address allocation proxy capability; and if the value is 11, it indicates reservation.

It should be noted that the Node General Capability Sub-TLV appears only once in the hello PDU. If the hello PDU received by the second node (the I node or the E node) has more than one Node General Capability Sub-TLVs, the second node discards the hello PDU.

In a second implementation, the address allocation capability indication information is carried in a link-state routing protocol (wireless link state protocol, WLS) packet, and the WLS packet is for example, a link state packet (link state PDU). That is, the first node advertises the address allocation capability indication information in a link state packet of the first node. When receiving the link state packet, the second node records an address allocation capability of the first node. Optionally, the link state packet includes a Node Capability TLV. For a definition of the Node Capability TLV, refer to FIG. 6-1. For details, refer to the description of the Node Capability TLV in the first implementation. A prerequisite of the second implementation is that a WLS is deployed in a communication domain (including the first node and the second node). In other words, this implementation depends on that a network routing protocol of the communication domain is the WLS.

In a third implementation, the address allocation capability indication information is carried in a non-link-state routing protocol packet, and a non-link-state routing protocol is, for example, an ad hoc on-demand distance vector routing (Ad hoc On-Demand Distance Vector Routing, AODV) protocol. A prerequisite of the third implementation is that the non-link-state routing protocol (for example, AODV) is deployed in a communication domain (including the first node and the second node). In other words, this implementation depends on that a network routing protocol of the communication domain is the non-link-state routing protocol. For the non-link-state routing protocol, a new protocol PDU may be defined to advertise the address allocation capability indication information. For example, the address allocation capability indication information may be advertised in a broadcast or multicast manner. In this application, the non-link-state routing protocol packet is used as an example to describe the new protocol PDU. In actual application, another name may be used for description. Optionally, the non-link-state routing packet includes a Node Capability TLV. For a definition of the Node Capability TLV, refer to FIG. 6-1. For details, refer to the description of the Node Capability TLV in the first implementation.

The foregoing three implementations are used as examples, and do not constitute a limitation on this application. In actual application, the address allocation capability indication information may be carried in another PDU.

In the embodiment shown in FIG. 6, the adjacent nodes notify each other of an address allocation capability based on address allocation capability indication information, and there is no need to search, by using a broadcast message or a multicast message, for a node having an address allocation capability, so that radio resource overheads and time can be reduced. The second node learns of the address allocation capability of the first node, so that the second node determines whether to initiate an address request to the first node, to reduce unnecessary address request packets, and further reduce radio resource overheads.

That one communication domain includes one M node is used as an example. A combination manner of an address allocation capability of the first node and an address allocation capability of the second node may be the following.

Manner (1): The first node has an address allocation capability, and the second node does not have an address allocation capability. The first node may be an I node that has a function of the M node, and the second node may be an I node or an E node that does not have an address allocation capability.

Manner (2): The first node has an address allocation proxy capability, and the second node does not have an address allocation capability. The first node may be an I node having an address allocation proxy capability, and the second node may be an I node or an E node that does not have an address allocation capability. In the manner (2), the communication domain further includes a third node having an address allocation capability, that is, the third node may be an I node that has a function of the M node. The third node may be directly connected or not directly connected to the first node.

Manner (3): The first node has an address allocation capability, and the second node has an address allocation proxy capability. The first node may be an I node that has a function of the M node, and the second node may be an I node having an address allocation proxy capability. Optionally, in the manner (3), the communication domain may further include a fourth node that does not have an address allocation capability, and the fourth node is directly connected to the second node. The fourth node may be an I node or an E node.

Manner (4): Neither the first node nor the second node has an address allocation capability. The first node may be an I node or an E node, and the second node may be an I node or an E node.

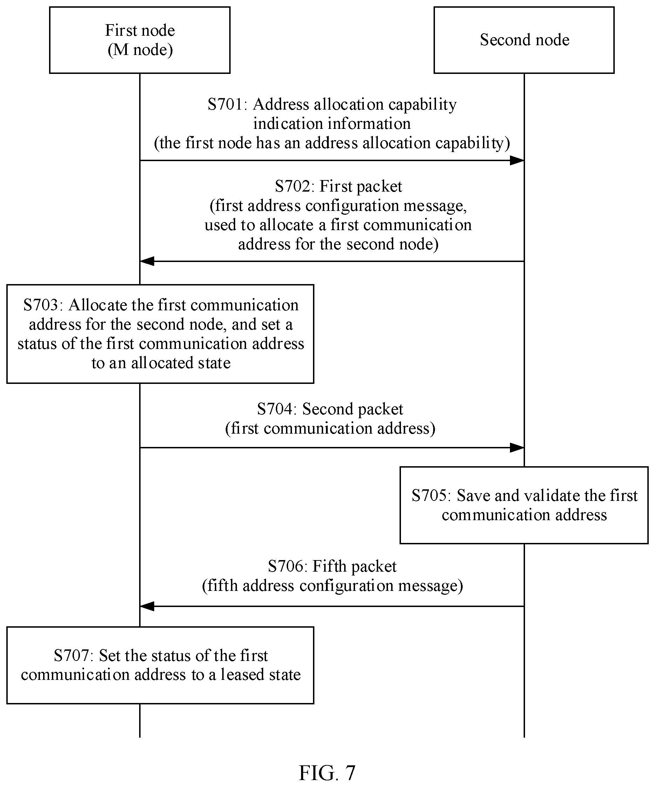

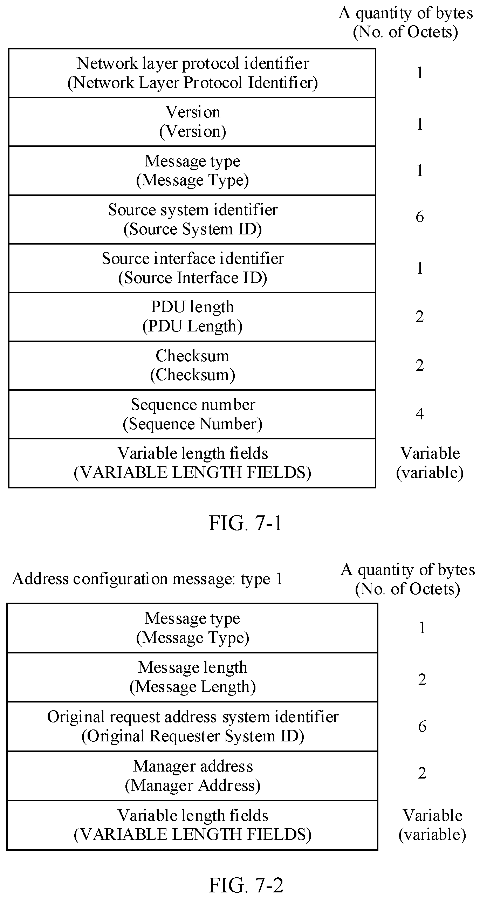

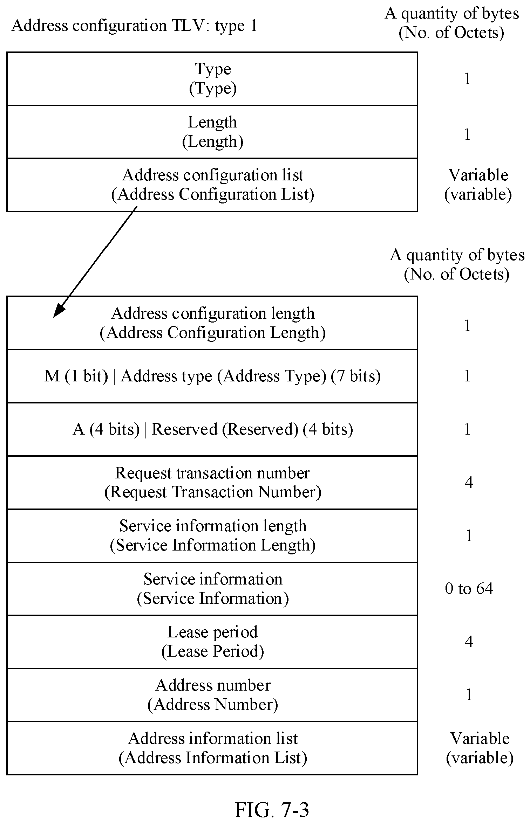

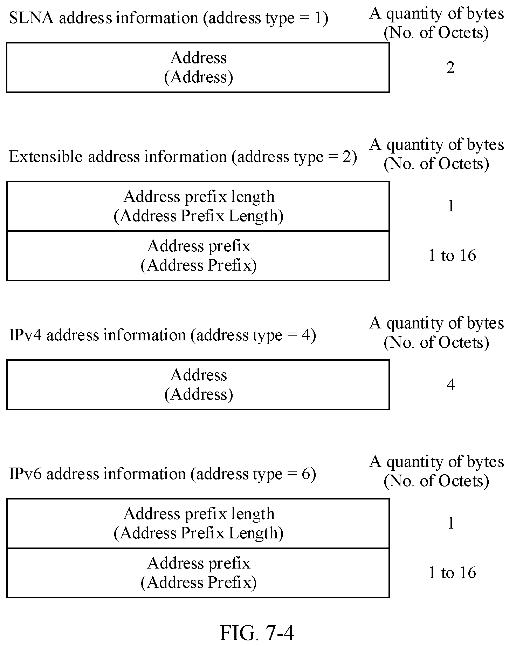

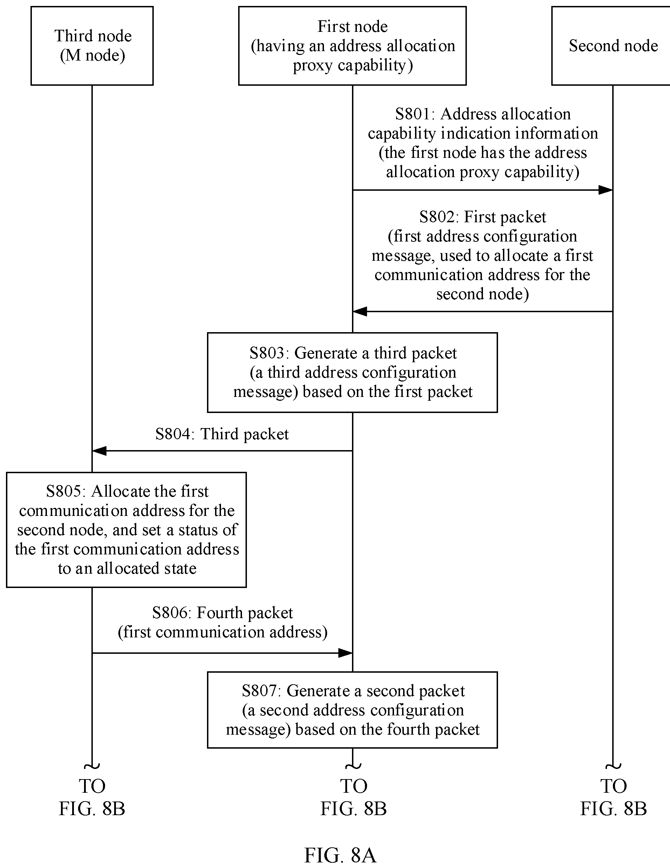

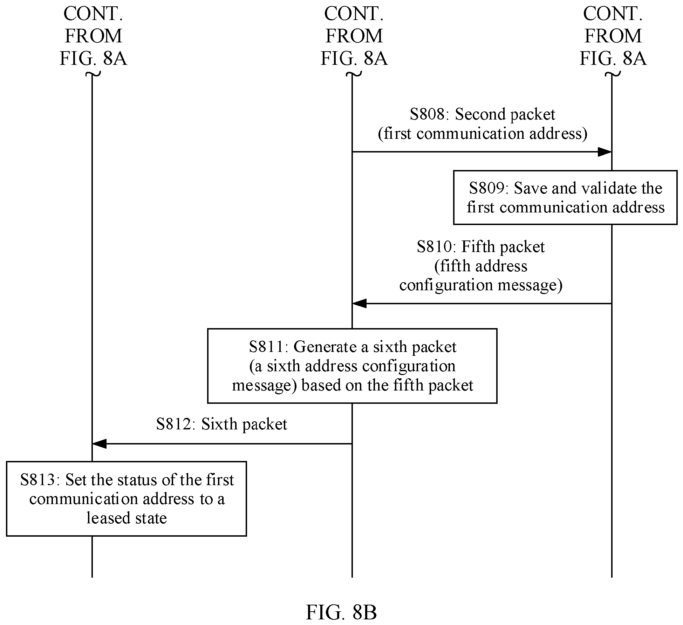

For the foregoing manner (1) to manner (3), a process of requesting a communication address may be further performed. For the manner (1), the second node directly requests the communication address from the first node. Refer to an embodiment shown in FIG. 7 for this process. For the manner (2), the second node may request the communication address through the first node from the third node. Refer to an embodiment shown in FIG. 8A and FIG. 8B for this process. For the manner (3), the fourth node may request the communication address through the second node from the first node. This is similar to the manner (2).

FIG. 7 is a schematic flowchart of another communication method according to this application. In FIG. 7, a first node has a function of an M node (that is, has an address allocation capability), a second node is a newly added I node or E node (no communication address is allocated), and the second node is directly connected to the first node. The method shown in FIG. 7 may include but is not limited to the following steps.

S701: The first node sends address allocation capability indication information to the second node. Correspondingly, the second node receives the address allocation capability indication information from the first node. The address allocation capability indication information indicates that the first node has an address allocation capability.

S702: The second node sends a first packet to the first node. Correspondingly, the first node receives the first packet from the second node. The first packet includes a first address configuration message, and the first address configuration message is used to allocate a first communication address for the second node.

When learning that the first node has an address allocation capability, the second node sends the first packet to the first node. A packet type of the first packet may be a general message PDU (general message PDU, GMP). The GMP is used for one-hop communication between a node and a directly connected node when the node does not have a communication address. The GMP is used only for one-hop communication. A prerequisite is that a neighbor relationship has been established between two nodes that use the GMP for communication. A valid neighbor relationship indicates that security authentication is successful. Compared with a dynamic host configuration protocol (dynamic host configuration protocol, DHCP) packet, the GMP can reduce radio resource overheads. Compared with an IPv6 neighbor discovery protocol packet, the GMP can reduce radio resource overheads.

For example, refer to a GMP format shown in FIG. 7-1. The format may include at least one of the following fields:
- network layer protocol identifier (Network Layer Protocol Identifier), used to identify a GMP;
- version (Version), used to identify a version number of the GMP, for example, Version 1;
- message type (Message Type), indicating a message type carried in the GMP, where for example, if the message type is 1, it indicates that information carried in the GMP is an address configuration message (Address Configuration Message);
- source system identifier (Source System ID), namely, a local system identifier;
- source interface identifier (Source Interface ID), namely, an identifier of an air interface for sending a packet locally;
- PDU length (PDU Length), a length of an entire packet, including a packet header (header);
- checksum (Checksum), a checksum of an entire packet;
- sequence number (Sequence Number), used to prevent retransmission attacks; and
- variable length fields (VARIABLE LENGTH FIELDS). For example, when Message Type is 1, the variable length fields carry content of the Address Configuration Message.

For example, refer to a format of the address configuration message (Address Configuration Message) shown in FIG. 7-2. The format may include at least one of the following fields:
- message type (Message Type), for example, 1, indicating that a message is an address configuration message;
- message length (Message Length), indicating a length of the address configuration message, and being indicated by two bytes;
- original request address system identifier (Original Requester System ID);
- manager address (Manager Address), an address of an M node responsible for allocating an address, where when a packet sent by a request end (a node requesting a communication address) carries the address configuration message, the field may be 0; and
- variable length fields (VARIABLE LENGTH FIELDS), various TLVs in the address configuration message.

For example, refer to a TLV of the address configuration message shown in FIG. 7-3. The TLV may include at least one of the following fields:
- address configuration length (Address Configuration Length);
- M field, occupying 1 bit, where for example, when a value of the bit is 0, it indicates a unicast address; and when a value of the bit is 1, it indicates a multicast address;
- address type (Address Type) (or referred to as an address family (Address Family)), indicating a type of a communication address that is requested, released, or renewed, where the address type may be classified into four types: SLNA, type 1; extensible address, type 2; IPv4 address, type 4; and IPv6 address, type 6;
- A field, where a value of the A field indicates an address configuration action, for example:
   - when a value of the A field is 0, it indicates first request information (apply) used by a request end to request to allocate a new communication address;
   - when a value of the A field is 1, it indicates lease renewal information (renew lease) used by the request end to request to renew an existing communication address;
   - when a value of the A field is 2, it indicates consent information (ack) indicating that a responder agrees to allocate or renew a communication address; or indicating that the responder has allocated a communication address or has renewed a communication address;
   - when a value of the A field is 3, it indicates rejection information (nck) indicating that the responder refuses to allocate or renew a communication address;
   - when a value of the A field is 4, it indicates release information (release) used by the request end to indicate to release a communication address, that is, the request end actively requests to release the communication address;
   - when a value of the A field is 5, it indicates second request information (reapply) used by the request end to request to allocate a new communication address when the request end finds that a current communication address is in conflict or is unavailable; and
   - when a value of the A field is 6, it indicates confirmation information (confirm) indicating the request end to confirm use of an allocated communication address or confirm release of the communication address (the request end is a node that requests to allocate a communication address, or may be described as a client, or the like; and the responder is a node that allocates a communication address, or may be described as a server, or the like);
- request transaction number (Request Transaction Number), where the transaction number is used to distinguish different requests (for example, requesting a communication address or releasing a communication address), and a response message also needs to carry the transaction number to respond to a specific request;
- service information length (Service Information Length), indicating a length of next service information;
- service information (Service Information), namely, description information of the service information, for example, an application ID, where when the field is not filled, it indicates that a communication address is not a communication address of a specific application, and the communication address may have a plurality of purposes and is not an anycast address; and if the communication address is an anycast address, the service information cannot be empty;
- lease period (Lease Period), indicating a lease period of a communication address, and in a unit of second, where when a communication address is requested, the lease period cannot be less than 300 seconds;
- address number (Address Number), where when a communication address is requested, this field indicates a quantity of communication addresses to be requested; and when a communication address is renewed or is not requested, this field indicates a quantity of pieces of subsequent address information (Address Information); and
- address information list (Address information List), including one or more pieces of address information.

For example, refer to the address information shown in FIG. 7-4. The address information includes address information of four address types. For example, for an SLNA (address type = 1, that is, type = 1), address information of the SLNA includes a specific SLNA. For another example, for an extensible address (address type = 1, that is, type = 1), address information of the extensible address includes an address prefix length and an address prefix of the extensible address.

A first packet, for example, a first GMP, includes a first address configuration message, and the first address configuration message includes first request information used to request to allocate a new communication address, for example, a first communication address, to the second node. For example, based on FIG. 7-3, a value of the A field in the first address configuration message is 0.

Optionally, the first packet further includes address type indication information indicating a type of a communication address requested to be allocated, namely, a type of the first communication address. For example, based on FIG. 7-3, the first address configuration message further includes an address type (Address Type). In the embodiment shown in FIG. 7, the type of the first communication address is an SLNA. That is, a newly added node requests an SLNA first time, to perform routing and forwarding in a communication domain based on the SLNA. In this case, based on FIG. 7-3, the address type in the first address configuration message is type 1.

Optionally, the first packet further includes a message type (Message type) indicating whether the first packet includes the first address configuration message. For example, based on FIG. 7-1, if Message type is 1, it indicates that the first packet includes the first address configuration message; and if Message type is another value, it indicates that the first packet does not include the first address configuration message.

S703: The first node allocates the first communication address for the second node, and sets a status of the first communication address to an allocated state.

When receiving the first packet, the first node determines whether to allocate the first communication address for the second node. If the first node can allocate the first communication address for the second node, the first node allocates the first communication address for the second node. After the allocation, the first node sets a status of the first communication address to an allocated state, so that the first node manages communication addresses of nodes.

Optionally, the first packet further includes a lease period indicating time for requesting to lease the first communication address. For example, based on FIG. 7-3, the first address configuration message further includes a lease period (Lease Period). The second node may set leasable time of the first communication address based on the lease period. For example, a lease period carried in the first packet is 350 seconds, and the second node may set the leasable time to 350 seconds, 400 seconds, or the like. This depends on a specific situation.

S704: The first node sends a second packet to the second node. Correspondingly, the second node receives the second packet from the first node. The second packet includes the first communication address.

After allocating the first communication address for the second node, the first node sends the second packet to the second node. A packet type of the second packet is the same as a packet type of the first packet, and may be a GMP.

The second packet includes a second address configuration message, and the second address configuration message includes consent information indicating that the first communication address has been allocated. For example, based on FIG. 7-3, a value of the A field in the second address configuration message is 2. The second packet further includes the first communication address. For example, based on FIG. 7-4, an address information list in the second address configuration message includes an SLNA of the second node.

Optionally, the second packet further includes leasable time of the first communication address.

S705: The second node saves and validates the first communication address.

When receiving the second packet, the second node obtains the first communication address from the second packet, and stores the first communication address. The validating the first communication address may be understood as using the first communication address to perform routing and/or forwarding when routing and/or forwarding need/needs to be performed.

S706: The second node sends a fifth packet to the first node. Correspondingly, the first node receives the fifth packet from the second node. The fifth packet includes a fifth address configuration message.

A packet type of the fifth packet is the same as a packet type of the first packet, and may be a GMP.

The fifth packet includes the fifth address configuration message, and the fifth address configuration message includes confirmation information indicating to confirm use of the first communication address. For example, based on FIG. 7-3, a value of the A field in the fifth address configuration message is 6.

S707: The first node sets the status of the first communication address to a leased state.

When receiving the fifth packet, the first node sets the status of the first communication address to a leased state, so that the first node manages communication addresses of nodes.

In the embodiment shown in FIG. 7, when learning that the first node has an address allocation capability, the second node requests the first node to allocate an SLNA for the second node, so that the second node dynamically obtains the SLNA, and the first node manages or controls the second node. The SLNA is concise and short. This facilitates transmission of more payloads in a valid data frame and improves a payload ratio.

In FIG. 7, an example in which the first node agrees to allocate the first communication address for the second node is used. If the first node refuses to allocate the first communication address for the second node, the second address configuration message in the second packet includes rejection information indicating to reject allocation of the first communication address. For example, based on FIG. 7-3, a value of the Afield in the second address configuration message is 3. Further, step S705 to step S707 are not performed. Optionally, after receiving the second packet, the second node may send the first packet to the first node again, to request the communication address.

FIG. 8A and FIG. 8B are a schematic flowchart of still another communication method according to this application. In FIG. 8A and FIG. 8B, a third node has a function of an M node (that is, has an address allocation capability), a second node is a newly added I node or E node (no communication address is allocated), and a first node has an address allocation proxy capability. The first node is directly connected or not directly connected to the third node, and the second node is directly connected to the first node. The method shown in FIG. 8A and FIG. 8B may include but is not limited to the following steps.

S801: The first node sends address allocation capability indication information to the second node. Correspondingly, the second node receives the address allocation capability indication information from the first node. The address allocation capability indication information indicates that the first node has an address allocation proxy capability.

S802: The second node sends a first packet to the first node. Correspondingly, the first node receives the first packet from the second node. The first packet includes a first address configuration message, and the first address configuration message is used to allocate a first communication address for the second node.

When learning that the first node has an address allocation proxy capability, the second node sends the first packet to the first node, to request the first node to relay an address request for the second node. A packet type of the first packet may be a GMP. For a GMP format and the first packet, refer to detailed descriptions of the GMP format and the first packet in the embodiment shown in FIG. 7. Details are not described herein again.

S803: The first node generates a third packet based on the first packet. The third packet includes a third address configuration message, and the third address configuration message is used to allocate the first communication address for the second node.

When receiving the first packet, the first node extracts the first address configuration message from the first packet (that is, decapsulates the first packet to obtain the first address configuration message), and encapsulates the first address configuration message into the third packet. The third packet includes the third address configuration message, and content carried in the third address configuration message is the same as content carried in the first address configuration message.

A packet type of the third packet is different from the packet type of the first packet, and the packet type of the third packet may be an address configuration protocol (address configuration protocol, ACP) packet (packet). The ACP is a protocol that works on a connection-less transport protocol (connection-less transport protocol, CLTP). The ACP adopts a client-server (Client-Server) mode and has an independent port number (for example, a port number of a client is 5, and a port number of a server is 6). The ACP is defined between an address request agent and an address allocation agent to request and configurate an address, that is, an ACP is defined between a node having an address allocation proxy capability and a node having an address allocation capability to request and configurate an address (for example, renewing an address).

The address request agent is responsible for encapsulation and decapsulation, and does not record a communication address of an address requestor. That is, the address request agent is stateless. For the address allocator, recorded stateful data may be as small as possible, to reduce load of the address allocator, for example, record a correspondence between the address requestor and the communication address of the address requestor, and optionally record a status (for example, an allocated state or a leased state) of the communication address.

Compared with a DHCP packet, an ACP packet reduces radio resource consumption. Compared with an IPv6 neighbor discovery protocol packet, the ACP packet can reduce radio resource consumption and support a multi-hop wireless access network.

A prerequisite for allocating, by the node having the address allocation capability, a communication address for an indirectly connected node, namely, a prerequisite for allocating, by the third node, the first communication address for the second node includes:
A. After the third node establishes a neighbor relationship with the first node, the first node is already configured with an SLNA.
B. The first node has learned of an SLNA of the third node.

The first node may learn of the SLNA of the third node in a manner a or manner b. Manner a: The third node has a default anycast (anycast) address (unicast) (Manager Node Anycast Address), for example, 127.2. The anycast address is known to all nodes having an address allocation proxy capability. Manner b: When the third node does not use a default anycast address, the first node records a unicast address of the first node when requesting the SLNA for the third node.

The second node may also learn of the SLNA of the third node in the foregoing manner a.

S804: The first node sends the third packet to the third node. Correspondingly, the third node receives the third packet from the first node.

The third packet includes the third address configuration message, and the third address configuration message includes first request information used to request to allocate a new communication address, for example, a first communication address, for the second node. For example, based on FIG. 7-3, a value of the A field in the third address configuration message is 0.

Optionally, the third packet further includes address type indication information indicating a type of a communication address requested to be allocated, namely, a type of the first communication address. For example, based on FIG. 7-3, the third address configuration message further includes an address type (Address Type). In the embodiment shown in FIG. 7, the type of the first communication address is an SLNA. That is, a newly added node requests an SLNA first time, to perform routing and forwarding in a communication domain based on the SLNA. In this case, based on FIG. 7-3, the address type in the third address configuration message is type 1.

Optionally, the third packet further includes a message type (Message type) indicating whether the third packet includes the third address configuration message. For example, based on FIG. 7-1, if Message type is 1, it indicates that the third packet includes the third address configuration message; and if Message type is another value, it indicates that the third packet does not include the third address configuration message.

S805: The third node allocates the first communication address for the second node, and sets a status of the first communication address to an allocated state. For step S805, refer to the specific description of step S703 in the embodiment shown in FIG. 7. Details are not described herein again.

S806: The third node sends a fourth packet to the first node. Correspondingly, the first node receives the fourth packet from the third node. The fourth packet includes the first communication address.

After allocating the first communication address for the second node, the third node sends the fourth packet to the first node. A packet type of the fourth packet is the same as the packet type of the third packet, and may be an ACP packet.

The fourth packet includes a fourth address configuration message, and the fourth address configuration message includes consent information indicating that the first communication address has been allocated. For example, based on FIG. 7-3, a value of the A field in the fourth address configuration message is 2. The fourth packet further includes the first communication address. For example, based on FIG. 7-4, an address information list in the fourth address configuration message includes an SLNA of the second node.

Optionally, the fourth packet further includes leasable time of the first communication address.

S807: The first node generates a second packet based on the fourth packet.

When receiving the fourth packet, the first node extracts the fourth address configuration message from the fourth packet, and encapsulates the fourth address configuration message into the second packet. The second packet includes a second address configuration message, and content carried in the second address configuration message is the same as content carried in the fourth address configuration message.

The packet type of the fourth packet is different from a packet type of the second packet. The packet type of the fourth packet is an ACP packet, and the packet type of the second packet is a GMP.

S808: The first node sends the second packet to the second node. Correspondingly, the second node receives the second packet from the first node.

The second packet includes the second address configuration message, and the second address configuration message includes consent information indicating that the first communication address has been allocated. For example, based on FIG. 7-3, a value of the A field in the second address configuration message is 2. The second packet further includes the first communication address. For example, based on FIG. 7-4, an address information list in the second address configuration message includes an SLNA of the second node.

Optionally, the second packet further includes leasable time of the first communication address.

S809: The second node saves and validates the first communication address.

S810: The second node sends a fifth packet to the first node. Correspondingly, the first node receives the fifth packet from the second node. The fifth packet includes a fifth address configuration message.

For step S809 and step S810, refer to the specific description of step S705 and step S706 in the embodiment shown in FIG. 7. Details are not described herein again.

S811: The first node generates a sixth packet based on the fifth packet.

When receiving the fifth packet, the first node extracts the fifth address configuration message from the fifth packet, and encapsulates the fifth address configuration message into the sixth packet. The sixth packet includes a sixth address configuration message, and content carried in the sixth address configuration message is the same as content carried in the fifth address configuration message.

A packet type of the fifth packet is different from a packet type of the sixth packet. The packet type of the sixth packet is an ACP packet, and the packet type of the fifth packet is a GMP.

S812: The first node sends the sixth packet to the third node. Correspondingly, the third node receives the sixth packet from the first node.

The sixth packet includes the sixth address configuration message, and the sixth address configuration message includes confirmation information indicating to confirm use of the first communication address. For example, based on FIG. 7-3, a value of the A field in the sixth address configuration message is 6.

S813: The third node sets the status of the first communication address to a leased state.

For step S813, refer to the specific description of step S707 in the embodiment shown in FIG. 7. Details are not described herein again.

In the embodiment shown in FIG. 8A and FIG. 8B, when learning that the first node has an address allocation proxy capability, the second node requests the first node to request an SLNA from the third node for the second node. Therefore, a newly added node that is not directly connected to the M node can request to obtain the SLNA, to dynamically obtain the SLNA, so that the first node manages or controls the second node.

In FIG. 8A and FIG. 8B, that the third node agrees to allocate the first communication address for the second node is used as an example. If the third node refuses to allocate the first communication address for the second node, the fourth address configuration message in the fourth packet includes rejection information indicating to reject allocation of the first communication address. For example, based on FIG. 7-3, a value of the A field in the fourth address configuration message is 3. Further, the second address configuration message in the second packet includes the rejection information. Further, step S809 to step S813 are not performed.

In an optional embodiment, the first node has a function of the M node (that is, has an address allocation capability), the second node has an address allocation proxy capability, the fourth node is a newly added I node or E node (no communication address is allocated), the first node is directly connected or not directly connected to the second node, and the fourth node is directly connected to the second node. After the second node notifies the fourth node that the second node has the address allocation proxy capability, the method may include the following steps.

S8001: The fourth node sends a seventh packet to the second node. Correspondingly, the second node receives the seventh packet from the fourth node.

The seventh packet includes a seventh address configuration message, and the seventh address configuration message is used to request to allocate a second communication address for the fourth node. The seventh packet is similar to the first packet in the embodiment shown in FIG. 8A and FIG. 8B. For details, refer to the specific description of the first packet in the embodiment shown in FIG. 8A and FIG. 8B. Details are not described herein again.

S8002: The second node generates an eighth packet based on the seventh packet. Step S8002 is similar to step S803, and the eighth packet is similar to the third packet in the embodiment shown in FIG. 8A and FIG. 8B. For details, refer to the specific description of the third packet in the embodiment shown in FIG. 8A and FIG. 8B. Details are not described herein again.

S8003: The second node sends the eighth packet to the first node. Correspondingly, the first node receives the eighth packet from the second node.

S8004: The first node allocates the second communication address for the fourth node, and sets a status of the second communication address to an allocated state.

S8005: The first node sends a ninth packet to the second node. Correspondingly, the second node receives the ninth packet from the first node. The ninth packet includes the second communication address. The ninth packet is similar to the fourth packet in the embodiment shown in FIG. 8A and FIG. 8B. For details, refer to the specific description of the fourth packet in the embodiment shown in FIG. 8A and FIG. 8B. Details are not described herein again.

S8006: The second node generates a tenth packet based on the ninth packet. Step S8006 is similar to step S807, and the tenth packet is similar to the second packet in the embodiment shown in FIG. 8A and FIG. 8B. For details, refer to the specific description of the second packet in the embodiment shown in FIG. 8A and FIG. 8B. Details are not described herein again.

S8007: The second node sends the tenth packet to the fourth node. Correspondingly, the fourth node receives the tenth packet from the second node.

S8008: The fourth node saves and validates the second communication address. Step S8008 is similar to step S809.

S8009: The fourth node sends an eleventh packet to the second node. Correspondingly, the second node receives the eleventh packet from the fourth node.

S8010: The second node generates a twelfth packet based on the eleventh packet.

S8011: The second node sends the twelfth packet to the first node. Correspondingly, the first node receives the twelfth packet from the second node.

S8012: The first node sets the status of the second communication address to a leased state.

Step S8008 to step S8012 are similar to step S809 to step S813 in the embodiment shown in FIG. 8A and FIG. 8B. Refer to the specific description of the embodiment shown in FIG. 8A and FIG. 8B. Details are not described herein again.

FIG. 7, FIG. 8A, and FIG. 8B describe how a newly joined second node requests to obtain an SLNA. In a process of obtaining the SLNA, a node that has learned of the SLNA may learn an SLNA of the M node. For example, the second address configuration message of the second packet includes a manager address, and the manager address is the SLNA of the M node. The second node that has learned of the SLNA may request a service address from the first node that has an address allocation capability, and the second node is directly connected or not directly connected to the first node.

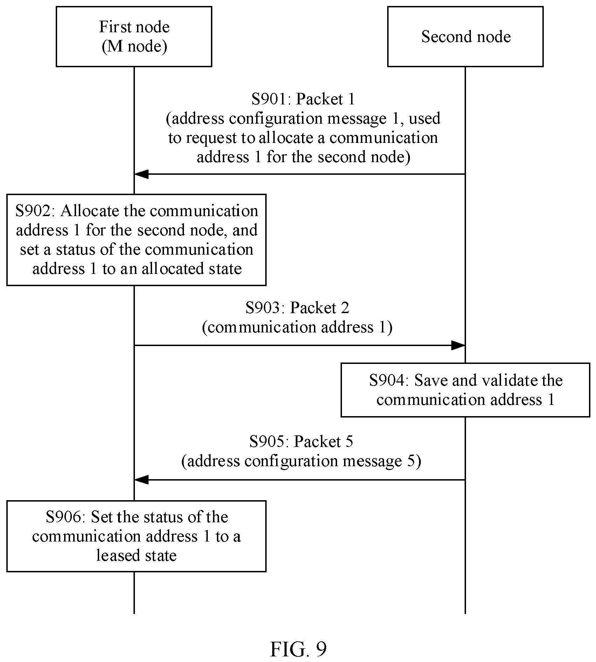

FIG. 9 is a schematic flowchart of still another communication method according to this application. The method shown in FIG. 9 may include but is not limited to the following steps.

S901: A second node sends a packet 1 to a first node. Correspondingly, the first node receives the packet 1 from the second node.

The packet 1 includes an address configuration message 1. The address configuration message 1 includes first request information used to request to allocate a new communication address, for example, a communication address 1, for the second node. For example, based on FIG. 7-3, a value of the A field in the first address configuration message is 0.

Optionally, the packet 1 further includes address type indication information indicating a type of a communication address requested to be allocated, namely, a type of the communication address 1. For example, based on FIG. 7-3, the address configuration message 1 further includes an address type (Address Type). In the embodiment shown in FIG. 9, the type of the communication address 1 is a service address, and may be an SLNA, an extensible address, an IPv4 address, or an IPv6 address. For example, the address type in the address configuration message 1 is type 2.

The communication address 1 may identify some or all applications on the second node, that is, the some or all applications may share one service address. The communication address 1 may also identify one application on the second node, that is, the second node requests a service address for the application. Alternatively, the communication address 1 may be an anycast address, and is specifically used to identify a first application on the second node and the first application on another node when the communication address 1 is used to identify an application. That is, for a service address of the anycast address, same applications deployed on different nodes may share one service address.

S902: The first node allocates the communication address 1 for the second node, and sets a status of the communication address 1 to an allocated state.

S903: The first node sends a packet 2 to the second node. Correspondingly, the second node receives the packet 2 from the first node. The second packet includes the communication address 1.

S904: The second node saves and validates the communication address 1.

S905: The second node sends a packet 5 to the first node. Correspondingly, the first node receives the packet 5 from the second node. The packet 5 includes an address configuration message 5.

S906: The first node sets the status of the communication address 1 to a leased state.

An implementation process of step S902 to step S906 is similar to an implementation process of step S703 to step S707, and details are not described herein again.

It should be noted that if the second node is directly connected to the first node, the packet 1, the packet 2, and the packet 3 are GMPs; or if the second node is not directly connected to the first node, the packet 1, the packet 2, and the packet 3 are ACP packets.

In the embodiment shown in FIG. 9, when learning of an SLNA of the first node, the second node may directly request a service address from the first node, and does not need to perform relay forwarding through a node having an address allocation proxy capability. This saves time and radio resources.

The second node that has learned of the SLNA may request to renew the first communication address from the first node that has an address allocation capability, and the second node is directly connected or not directly connected to the first node.

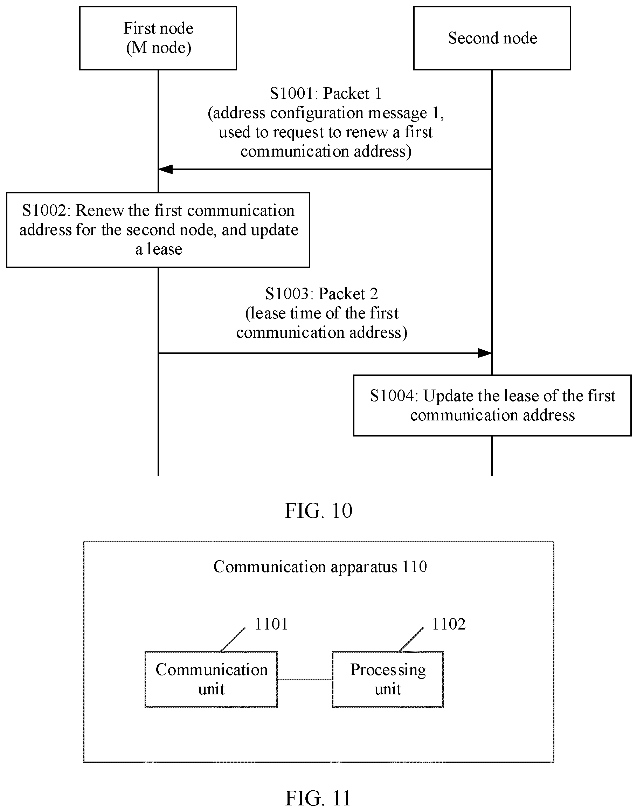

FIG. 10 is a schematic flowchart of still another communication method according to this application. The method shown in FIG. 10 may include but is not limited to the following steps.

S1001: A second node sends a packet 1 to a first node. Correspondingly, the first node receives the packet 1 from the second node.

The packet 1 includes an address configuration message 1, and the address configuration message 1 includes lease renewal information used to request to renew a first communication address. For example, based on FIG. 7-3, a value of the A field in the first address configuration message is 1.

Optionally, the packet 1 further includes address type indication information indicating a type of the first communication address requested to be renewed. For example, based on FIG. 7-3, the address configuration message 1 further includes an address type (Address Type).

The second node may send the packet 1 to the first node when a remaining lease period of the first communication address reaches a threshold. For example, when the remaining lease period of the first communication address is less than 40%, the packet 1 is sent to the first node.

S1002: The first node renews the first communication address for the second node, and updates a lease.

After receiving the packet 1, the first node checks whether the first communication address can be renewed. If the first communication address can be renewed, the first node renews the first communication address for the second node, and updates the lease. The lease includes a lease period.

S1003: The first node sends a packet 2 to the second node. Correspondingly, the second node receives the packet 2 from the first node. The second packet includes a lease period of the first communication address.

The lease period of the first communication address herein is a lease period obtained after the first node updates the lease. For example, the remaining lease period is prolonged. The packet 2 includes an address configuration message 2, and a value of an A field in the address configuration message 2 is 2.

S1004: The second node updates the lease of the first communication address.

The second node updates the lease of the first communication address based on the packet 2.

It should be noted that if the second node is directly connected to the first node, the packet 1 and the packet 2 are GMPs; or if the second node is not directly connected to the first node, the packet 1 and the packet 2 are ACP packets.

In the embodiment shown in FIG. 10, the second node may request to renew the first communication address from the first node, to prolong use time.

In FIG. 10, an example in which the first node agrees to renew the first communication address for the second node is used. If the first node refuses to renew the first communication address for the second node, the address configuration message 2 in the packet 2 includes rejection information indicating to reject renewal of the first communication address. For example, based on FIG. 7-3, the value of the A field in the address configuration message 2 is 3. Further, step S1004 is not performed. Optionally, after receiving the packet 2, the second node may send the packet 1 to the first node again, to request to renew the communication address.

The foregoing describes in detail the methods provided in embodiment of this application. The following provides an apparatus for implementing any method in embodiments of this application. For example, an apparatus is provided, including units (or means) for implementing steps performed by a node in any one of the foregoing methods.

FIG. 11 is a schematic diagram of a structure of a communication apparatus according to an embodiment of this application.

As shown in FIG. 11, the communication apparatus 110 may include a communication unit 1101 and a processing unit 1102. The communication unit 1101 and the processing unit 1102 may be software, hardware, or a combination of software and hardware.

The communication unit 1101 may implement a sending function and/or a receiving function, and the communication unit 1101 may also be described as a transceiver unit, an obtaining unit, or a sending unit. The communication unit 1101 may alternatively be a unit that integrates an obtaining unit and a sending unit. The obtaining unit is configured to implement a receiving function, and the sending unit is configured to implement a sending function. Optionally, the communication unit 1101 may be configured to receive information sent by another apparatus, or may be configured to send information to the another apparatus.

In a possible design, the communication apparatus 110 may correspond to the first node in the foregoing method embodiment. For example, the communication apparatus 110 may be the first node, or may be a chip in the first node. The communication apparatus 110 may include a unit configured to perform operations performed by the first node in the foregoing method embodiment, and units in the communication apparatus 110 are configured to implement the operations performed by the first node in the foregoing method embodiment. The units are described as follows.

The processing unit 1102 generates address allocation capability indication information.

The communication unit 1101 sends the address allocation capability indication information to a second node. The address allocation capability indication information indicates an address allocation capability of the first node.

Optionally, the address allocation capability indication information indicates that the first node has an address allocation capability, the address allocation capability indication information indicates that the first node does not have an address allocation capability, or the address allocation capability indication information indicates that the first node has an address allocation proxy capability.

Optionally, the address allocation capability indication information is carried in a wireless adjacency protocol packet.

Optionally, the address allocation capability indication information is carried in a link-state routing protocol packet; or the address allocation capability indication information is carried in a non-link-state routing protocol packet.

Optionally, the communication unit 1101 is further configured to receive a first packet from the second node, where the first packet includes a first address configuration message, and the first address configuration message is used to allocate or release a first communication address for the second node.

Optionally, the first address configuration message includes at least one of the following:
first request information, where the first request information is used to request to allocate the first communication address for the second node;
lease renewal information, where the lease renewal information is used to request to renew the first communication address;
release information, where the release information indicates to release the first communication address;
second request information, where the second request information is used to request to allocate the first communication address for the second node when a current communication address of the second node is unavailable; and
confirmation information, where the confirmation information indicates to confirm use of the first communication address or confirm release of the first communication address.

Optionally, the first packet further includes address type indication information, and the address type indication information indicates a type of the first communication address.

Optionally, the type of the first communication address is a first address type or a second address type, and the second address type is an extensible address type, an IPv4 address type, or an IPv6 address type.

Optionally, the first address type is used for routing and forwarding in a communication domain or is used to identify an application, and an address length corresponding to the first address type is 2 bytes; and the second address type is used to identify an application.

Optionally, when the first communication address is used to identify an application, the first communication address is specifically used to identify some or all applications on the second node, or is specifically used to identify one application on the second node; or when the first communication address is an anycast address, and is used to identify an application, the first communication address is specifically used to identify a first application on the second node and the first application on another node.

Optionally, the first packet further includes a message type, and the message type indicates whether the first packet includes the first address configuration message.

Optionally, the address allocation capability indication information indicates that the first node has the address allocation capability. The communication unit is further configured to send a second packet to the second node based on the first packet, where a packet type of the second packet is the same as a packet type of the first packet.

Optionally, the second packet includes the first communication address.

Optionally, the processing unit 1102 is further configured to set a status of the first communication address to an allocated state.

Optionally, the second packet includes a second address configuration message, and the second address configuration message includes at least one of the following:
consent information, where the allocation information indicates that the first communication address has been allocated or the first communication address has been renewed; and
rejection information, where the rejection information indicates to reject allocation of the first communication address or reject renewal of the first communication address.

Optionally, the address allocation capability indication information indicates that the first node has the address allocation proxy capability. The communication unit 1101 is further configured to send a third packet to a third node based on the first packet. The third packet includes a third address configuration message, and the third address configuration message is used to allocate or release the first communication address for the second node.

Optionally, the third address configuration message includes at least one of the following:
first request information, where the first request information is used to request to allocate the first communication address for the second node;
lease renewal information, where the lease renewal information is used to request to renew the first communication address;
release information, where the release information indicates to release the first communication address;
second request information, where the second request information is used to request to allocate the first communication address for the second node when a current communication address of the second node is unavailable; and
confirmation information, where the confirmation information indicates to confirm use of the first communication address or confirm release of the first communication address.

Optionally, the third packet further includes address type indication information, and the address type indication information indicates a type of the first communication address.

Optionally, the third packet further includes a message type, and the message type indicates whether the third packet includes the third address configuration message.

Optionally, a packet type of the third packet is different from a packet type of the first packet.

Optionally, the communication unit 1101 is further configured to receive a fourth packet from the third node, where a packet type of the fourth packet is the same as a packet type of the third packet.

Optionally, the fourth packet includes the first communication address.

Optionally, the fourth packet includes a fourth address configuration message, and the fourth address configuration message includes at least one of the following:
consent information, where the allocation information indicates that the first communication address has been allocated or the first communication address has been renewed; and
rejection information, where the rejection information indicates to reject allocation of the first communication address or reject renewal of the first communication address.

Optionally, the communication unit 1101 is further configured to send a second packet to the second node based on the fourth packet, where a packet type of the second packet is the same as a packet type of the first packet.

Optionally, the second packet includes the first communication address.

Optionally, the second packet includes a second address configuration message, and the second address configuration message includes at least one of the following:
consent information, where the allocation information indicates that the first communication address has been allocated or the first communication address has been renewed; and
rejection information, where the rejection information indicates to reject allocation of the first communication address or reject renewal of the first communication address.

In another possible design, the communication apparatus 110 may correspond to the second node in the foregoing method embodiment. For example, the communication apparatus 110 may be the second node, or may be a chip in the second node. The communication apparatus 110 may include a unit configured to perform operations performed by the second node in the foregoing method embodiment, and units in the communication apparatus 110 are configured to implement the operations performed by the second node in the foregoing method embodiment. The units are described as follows.

The communication unit 1101 is configured to receive address allocation capability indication information from the first node, where the address allocation capability indication information indicates an address allocation capability of the first node.

Optionally, the address allocation capability indication information indicates that the first node has an address allocation capability, the address allocation capability indication information indicates that the first node does not have an address allocation capability, or the address allocation capability indication information indicates that the first node has an address allocation proxy capability.

Optionally, the address allocation capability indication information is carried in a wireless adjacency protocol packet.

Optionally, the address allocation capability indication information is carried in a link-state routing protocol packet; or the address allocation capability indication information is carried in a non-link-state routing protocol packet.

Optionally, the communication unit 1101 is further configured to send a first packet to the first node based on the address allocation capability indication information, where the first packet includes a first address configuration message, and the first address configuration message is used to allocate or release a first communication address for the second node.

Optionally, the first address configuration message includes at least one of the following:
first request information, where the first request information is used to request to allocate the first communication address for the second node;
lease renewal information, where the lease renewal information is used to request to renew the first communication address;
release information, where the release information indicates to release the first communication address;
second request information, where the second request information is used to request to allocate the first communication address for the second node when a current communication address of the second node is unavailable; and
confirmation information, where the confirmation information indicates to confirm use of the first communication address or confirm release of the first communication address.

Optionally, the first packet further includes address type indication information, and the address type indication information indicates a type of the first communication address.

Optionally, the type of the first communication address is a first address type or a second address type, and the second address type is an extensible address type, an IPv4 address type, or an IPv6 address type.

Optionally, the first address type is used for routing and forwarding in a communication domain or is used to identify an application, and an address length corresponding to the first address type is 2 bytes; and the second address type is used to identify an application.

Optionally, when the first communication address is used to identify an application, the first communication address is specifically used to identify some or all applications on the second node, or is specifically used to identify one application on the second node; or when the first communication address is an anycast address, and is used to identify an application, the first communication address is specifically used to identify a first application on the second node and the first application on another node.

Optionally, the first packet further includes a message type, and the message type indicates whether the first packet includes the first address configuration message.

Optionally, the communication unit 1101 is further configured to receive a second packet from the first node, where a packet type of the second packet is the same as a packet type of the first packet.

Optionally, the second packet includes the first communication address.

Optionally, the second packet includes a second address configuration message, and the second address configuration message includes at least one of the following:
consent information, where the allocation information indicates that the first communication address has been allocated or the first communication address has been renewed; and
rejection information, where the rejection information indicates to reject allocation of the first communication address or reject renewal of the first communication address.

Optionally, when the second node has an address allocation proxy capability, and the address allocation capability indication information indicates that the first node has the address allocation capability, the communication unit 1101 is further configured to receive a seventh packet from a fourth node, where the seventh packet includes a seventh address configuration message, and the seventh address configuration message is used to allocate or release a second communication address for the fourth node.

The fourth node is directly connected to the second node, and the second node may notify, through the address allocation capability indication information, the fourth node that the second node has the address allocation proxy capability.

Optionally, the communication unit 1101 is further configured to: after receiving the seventh packet, send an eighth packet to the first node based on the seventh packet.

Optionally, the communication unit 1101 is further configured to receive a ninth packet from the first node after sending the eighth packet to the first node.

Optionally, the communication unit 1101 is further configured to: after receiving the ninth packet from the first node, send a tenth packet to the fourth node based on the ninth packet.

Optionally, the communication unit 1101 is further configured to send a query request message to a fifth node, where the query request message includes a third communication address, a type of the third communication address is the second address type, the query request message is used to request to query a fourth communication address corresponding to the third communication address, and a type of the fourth communication address is the first address type. The fifth node may provide a mapping query function.

According to this embodiment of this application, the units in the apparatus shown in FIG. 11 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, because the node may alternatively include another unit, in actual application, these functions may alternatively be implemented with assistance of the another unit, and may be implemented by a plurality of units in collaboration.

It should be noted that for implementation of each unit, refer to corresponding descriptions of the method embodiments shown in FIG. 6, FIG. 7, FIG. 8A, FIG. 8B, FIG. 9, and FIG. 10.

In the communication apparatus 110 described in FIG. 11, the first node notifies the second node of the address allocation capability of the first node through the address allocation capability indication information, so that the second node determines whether to initiate an address request.

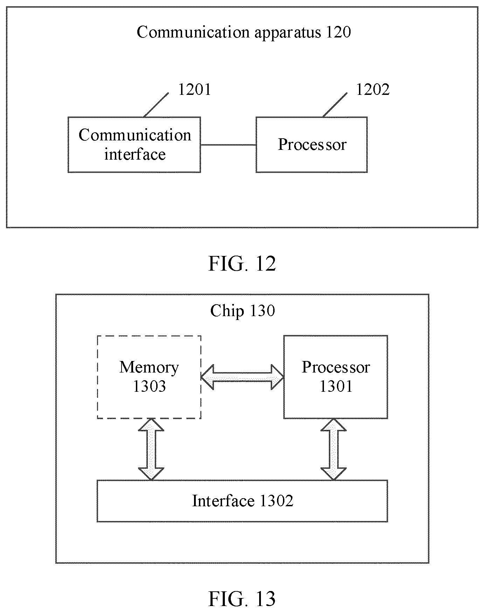

FIG. 12 is a schematic diagram of a structure of a communication apparatus according to an embodiment of this application.

It should be understood that a communication apparatus 120 shown in FIG. 12 is merely an example. The communication apparatus in this embodiment of this application may further include another component, or include a component with a function similar to that of each component in FIG. 12, or does not necessarily need to include all components in FIG. 12.

The communication apparatus 120 includes a communication interface 1201 and at least one processor 1202.

The communication apparatus 120 may correspond to a first node or a second node. The communication interface 1201 is configured to receive and send a message, information, or a packet, and the at least one processor 1202 executes a program instruction, so that the communication apparatus 120 implements a corresponding procedure of the method performed by a corresponding node in the foregoing method embodiment.

In a possible design, the communication apparatus 120 may correspond to the first node in the foregoing method embodiment. For example, the communication apparatus 120 may be the first node, or may be a chip in the first node. The communication apparatus 120 may include a component configured to perform an operation performed by the first node in the foregoing method embodiment. In addition, each component in the communication apparatus 120 is separately configured to implement the operation performed by the first node in the foregoing method embodiment. For details, refer to corresponding descriptions of the first node in the foregoing method embodiment.

In another possible design, the communication apparatus 120 may correspond to the second node in the foregoing method embodiment. For example, the communication apparatus 120 may be the second node, or may be a chip in the second node. The communication apparatus 120 may include a component configured to perform an operation performed by the second node in the foregoing method embodiment. In addition, each component in the communication apparatus 120 is separately configured to implement the operation performed by the second node in the foregoing method embodiment. For details, refer to corresponding descriptions of the second node in the foregoing method embodiment.

For a case in which the communication apparatus may be a chip or a chip system, refer to a schematic diagram of a structure of a chip shown in FIG. 13.

As shown in FIG. 13, a chip 130 includes a processor 1301 and an interface 1302. There may be one or more processors 1301, and there may be a plurality of interfaces 1302. It should be noted that functions corresponding to each of the processor 1301 and the interface 1302 may be implemented by using a hardware design, or may be implemented by using a software design, or may be implemented by using a combination of software and hardware. This is not limited herein.

Optionally, the chip 130 may further include a memory 1303, and the memory 1303 is configured to store necessary program instructions and data.

In this application, the processor 1301 may be configured to: invoke, from the memory 1303, a program for implementing the communication method provided in one or more embodiments of this application on the first node or the second node, and execute instructions included in the program. The interface 1302 may be configured to output an execution result of the processor 1301. In this application, the interface 1302 may be specifically configured to output each message, information, or packet of the processor 1301.

For the communication method provided in one or more embodiments of this application, refer to embodiments shown in FIG. 6, FIG. 7, FIG. 8A, FIG. 8B, FIG. 9, and FIG. 10. Details are not described herein again.

The processor in this embodiment of this application may be a central processing unit (Central Processing Unit, CPU), or the processor may be another general-purpose processor, a digital signal processor (digital signal processor, DSP), an application specific-integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the methods shown in FIG. 6, FIG. 7, FIG. 8A, FIG. 8B, FIG. 9, and FIG. 10 may be implemented.

According to the method provided in embodiments of this application, an embodiment of this application further provides a computer program product. The computer program product includes a computer program. When the computer program is run on a processor, the methods shown in FIG. 6, FIG. 7, FIG. 8A, FIG. 8B, FIG. 9, and FIG. 10 may be implemented.

An embodiment of this application provides a terminal device. The terminal device includes at least one of the communication apparatus 110, the communication apparatus 120, or the chip 130.

An embodiment of this application further provides a system. The system includes at least one terminal device, and/or at least one of the communication apparatus 110, the communication apparatus 120, or the chip 130.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processor unit (central processor unit, CPU), may be a network processor (network processor, NP), may be a digital signal processor (digital signal processor, DSP), may be a micro controller unit (micro controller unit, MCU), and may be a programmable logic device (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in the text are intended to include, but are not limited to these and any other suitable types of memories.

All or some of the foregoing embodiments may be implemented by using software, hardware, firmware, or any combination thereof. When software is used for implementation, the implementation may be totally or partially implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. The computer-readable storage medium may be any usable medium accessible by a computer, or a data storage device, like a server or a data center integrating one or more usable media. The usable medium may be a magnetic medium (for example, a floppy disk, a hard disk, or a magnetic tape), an optical medium (for example, a high-density digital video disc), a semiconductor medium (for example, a solid state disk), or the like.

Units in the foregoing apparatus embodiments completely correspond to the electronic device in the method embodiments, and corresponding modules or units perform corresponding steps. For example, a communication unit (transceiver) performs receiving or sending steps in the method embodiments, and other steps except the sending or receiving steps may be performed by a processing unit (processor). For a specific function of the unit, refer to the corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein the method is applied to a first node, and the method comprises:
generating address allocation capability indication information; and
sending the address allocation capability indication information to a second node, wherein the address allocation capability indication information indicates an address allocation capability of the first node.

2. The method according to claim 1, wherein the address allocation capability indication information indicates that the first node has an address allocation capability, the address allocation capability indication information indicates that the first node does not have an address allocation capability, or the address allocation capability indication information indicates that the first node has an address allocation proxy capability.

3. The method according to claim 1 or 2, wherein the address allocation capability indication information is carried in a wireless adjacency protocol packet.

4. The method according to claim 1 or 2, wherein the address allocation capability indication information is carried in a link-state routing protocol packet; or the address allocation capability indication information is carried in a non-link-state routing protocol packet.

5. The method according to claim 2, wherein the method further comprises:
receiving a first packet from the second node, wherein the first packet comprises a first address configuration message, and the first address configuration message is used to allocate or release a first communication address for the second node.

6. The method according to claim 5, wherein the first address configuration message comprises at least one of the following:
first request information, wherein the first request information is used to request to allocate the first communication address for the second node;
lease renewal information, wherein the lease renewal information is used to request to renew the first communication address;
release information, wherein the release information indicates to release the first communication address;
second request information, wherein the second request information is used to request to allocate the first communication address for the second node when a current communication address of the second node is unavailable; or
confirmation information, wherein the confirmation information indicates to confirm use of the first communication address or confirm release of the first communication address.

7. The method according to claim 5, wherein the first packet further comprises address type indication information, and the address type indication information indicates a type of the first communication address.

8. The method according to claim 7, wherein the type of the first communication address is a first address type or a second address type, and the second address type is an extensible address type, an IPv4 address type, or an IPv6 address type.

9. The method according to claim 8, wherein the first address type is used for routing and forwarding in a communication domain or is used to identify an application, and an address length corresponding to the first address type is 2 bytes; and the second address type is used to identify an application.

10. The method according to claim 9, wherein when the first communication address is used to identify an application, the first communication address is specifically used to identify some or all applications on the second node, or is specifically used to identify one application on the second node; or when the first communication address is an anycast address, and is used to identify an application, the first communication address is specifically used to identify a first application on the second node and the first application on another node.

11. The method according to claim 5, wherein the first packet further comprises a message type, and the message type indicates whether the first packet comprises the first address configuration message.

12. The method according to claim 5, wherein the address allocation capability indication information indicates that the first node has the address allocation capability; and
the method further comprises:
sending a second packet to the second node based on the first packet, wherein a packet type of the second packet is the same as a packet type of the first packet.

13. The method according to claim 12, wherein the second packet comprises the first communication address.

14. The method according to claim 13, wherein the method further comprises:
setting a status of the first communication address to an allocated state.

15. The method according to claim 12, wherein the second packet comprises a second address configuration message, and the second address configuration message comprises at least one of the following:
consent information, wherein the allocation information indicates that the first communication address has been allocated or the first communication address has been renewed; and
rejection information, wherein the rejection information indicates to reject allocation of the first communication address or reject renewal of the first communication address.

16. The method according to claim 5, wherein the address allocation capability indication information indicates that the first node has the address allocation proxy capability; and
the method further comprises:
sending a third packet to a third node based on the first packet, wherein the third packet comprises a third address configuration message, and the third address configuration message is used to allocate or release the first communication address for the second node.

17. The method according to claim 16, wherein the third address configuration message comprises at least one of the following:
first request information, wherein the first request information is used to request to allocate the first communication address for the second node;
lease renewal information, wherein the lease renewal information is used to request to renew the first communication address;
release information, wherein the release information indicates to release the first communication address;
second request information, wherein the second request information is used to request to allocate the first communication address for the second node when a current communication address of the second node is unavailable; or
confirmation information, wherein the confirmation information indicates to confirm use of the first communication address or confirm release of the first communication address.

18. The method according to claim 16, wherein the third packet further comprises address type indication information, and the address type indication information indicates a type of the first communication address.

19. The method according to claim 16, wherein the third packet further comprises a message type, and the message type indicates whether the third packet comprises the third address configuration message.

20. The method according to claim 16, wherein a packet type of the third packet is different from a packet type of the first packet.

21. The method according to claim 16, wherein the method further comprises:
receiving a fourth packet from the third node, wherein a packet type of the fourth packet is the same as a packet type of the third packet.

22. The method according to claim 21, wherein the fourth packet comprises the first communication address.

23. The method according to claim 21, wherein the fourth packet comprises a fourth address configuration message, and the fourth address configuration message comprises at least one of the following:
consent information, wherein the allocation information indicates that the first communication address has been allocated or the first communication address has been renewed; and
rejection information, wherein the rejection information indicates to reject allocation of the first communication address or reject renewal of the first communication address.

24. The method according to claim 21, wherein the method further comprises:
sending a second packet to the second node based on the fourth packet, wherein a packet type of the second packet is the same as a packet type of the first packet.

25. The method according to claim 24, wherein the second packet comprises the first communication address.

26. The method according to claim 24, wherein the second packet comprises a second address configuration message, and the second address configuration message comprises at least one of the following:
consent information, wherein the allocation information indicates that the first communication address has been allocated or the first communication address has been renewed; and
rejection information, wherein the rejection information indicates to reject allocation of the first communication address or reject renewal of the first communication address.

27. A communication method, wherein the method is applied to a second node, and the method comprises:
receiving address allocation capability indication information from a first node, wherein the address allocation capability indication information indicates an address allocation capability of the first node.

28. The method according to claim 27, wherein the address allocation capability indication information indicates that the first node has an address allocation capability, the address allocation capability indication information indicates that the first node does not have an address allocation capability, or the address allocation capability indication information indicates that the first node has an address allocation proxy capability.

29. The method according to claim 28, wherein the method further comprises:
sending a first packet to the first node based on the address allocation capability indication information, wherein the first packet comprises a first address configuration message, and the first address configuration message is used to allocate or release a first communication address for the second node.

30. The method according to claim 29, wherein the method further comprises:
receiving a second packet from the first node, wherein a packet type of the second packet is the same as a packet type of the first packet.

31. The method according to claim 30, wherein the second packet comprises the first communication address.

32. A communication apparatus, wherein the communication apparatus comprises a communication unit and a processing unit;
the processing unit is configured to generate address allocation capability indication information; and
the communication unit is configured to send the address allocation capability indication information to a second node, wherein the address allocation capability indication information indicates an address allocation capability of a first node.

33. A communication apparatus, wherein the communication apparatus comprises a communication unit, and
the communication unit is configured to receive address allocation capability indication information from a first node, wherein the address allocation capability indication information indicates an address allocation capability of the first node.

34. A communication apparatus, comprising a processor, wherein
when the processor invokes a computer program or instructions in a memory, the method according to any one of claims 1 to 26 or the method according to any one of claims 27 to 31 is performed.

35. A communication apparatus, comprising a logic circuit and a communication interface, wherein
the communication interface is configured to receive information or send information; and
the logic circuit is configured to receive information or send information through the communication interface, so that the method according to any one of claims 1 to 26 or the method according to any one of claims 27 to 31 is performed.

36. A terminal device, wherein the terminal device comprises a first node and/or a second node, wherein
the first node comprises the communication apparatus according to claim 32, or the first node is a node that implements the method according to any one of claims 1 to 26; and
the second node comprises the communication apparatus according to claim 33, or the second node is a node that implements the method according to any one of claims 27 to 31.

37. A computer-readable storage medium, wherein
the computer-readable storage medium is configured to store instructions or a computer program; and when the instructions or the computer program is executed, the method according to any one of claims 1 to 26 or the method according to any one of claims 27 to 31 is implemented.

38. A computer program product, comprising instructions or a computer program, wherein
when the instructions or the computer program is executed, the method according to any one of claims 1 to 26 or the method according to any one of claims 27 to 31 is implemented.
